# EUROPEAN PATENT SPECIFICATION

(11) **EP 3 907 807 B1**
(45) Date of publication and mention of the grant of the patent: **13.12.2023**
(21) Application number: 20896510.3
(22) Date of filing: 25.03.2020
(51) Int. Cl.: H01M 10/0583, H01M 10/04, H01M 4/70, H01M 4/74, H01M 6/00

(54) **ELECTRODE ASSEMBLY AND ITS FORMING METHOD AND MANUFACTURING SYSTEM, SECONDARY BATTERY, BATTERY MODULE AND DEVICE**
ELEKTRODENANORDNUNG UND IHRE BILDUNGSVERFAHREN UND HERSTELLUNGSSYSTEM, SEKUNDÄRBATTERIE, BATTERIEMODUL UND BATTERIEVORRICHTUNG
ENSEMBLE D'ÉLECTRODE ET SON PROCÉDÉ DE FORMATION ET SON SYSTÈME DE FABRICATION, BATTERIE SECONDAIRE, MODULE ET DISPOSITIF DE BATTERIE

(30) Priority: 04.12.2019 CN 201911224967
(43) Date of publication of application: 10.11.2021
(73) Proprietor: Contemporary Amperex Technology Co., Limited, Ningde, Fujian 352100 (CN)
(72) Inventor: ZHAO, Fenggang, Ningde, Fujian 352100 (CN); WU, Zhiyang, Ningde, Fujian 352100 (CN); LIAO, Ruhu, Ningde, Fujian 352100 (CN); ZENG, Gang, Ningde, Fujian 352100 (CN); DAI, Ya, Ningde, Fujian 352100 (CN); YU, Yongsheng, Ningde, Fujian 352100 (CN)
(74) Representative: Boult Wade Tennant LLP
(86) International application number: PCT/CN2020/081139
(87) International publication number: WO 2021/109363

(56) References cited:
- WO-A1-2018/174370
- CN-A- 101 485 033
- CN-A- 103 081 200
- CN-A- 103 959 540
- DE-A1-102015 116 095
- JP-A- 2013 218 804
- JP-A- 2019 057 422
- JP-A- 2019 169 331
- KR-B1- 100 537 607
- US-A- 5 582 931
- US-A1- 2005 019 652
- US-A1- 2007 202 401
- US-A1- 2011 104 567
- US-A1- 2012 058 387

## Description

### FIELD

The disclosure relates to a technical field of battery, and in particular to an electrode assembly and its forming method and a manufacturing system, a secondary battery, a battery module and a device.

### BACKGROUND

With developments of society, science and technology, secondary batteries are widely used to power high power devices, such as electric vehicles. The secondary battery forms a battery module by connecting a plurality of battery cells in series or in parallel to obtain a larger capacity or power.

The secondary battery includes a cathode electrode plate and an anode electrode plate, and the cathode electrode plate and the anode electrode plate are stacked to form an electrode assembly. However, after the cathode electrode plate and the anode electrode plate are stacked with respect to each other, at least one of the cathode electrode plate and the anode electrode plate may deviate from a predetermined position, which thereby affect an electrochemical performance of the secondary battery.

Prior art electrode assemblies for batteries are taught e.g. in JP 2013 218804 A, JP 2019 057422 A, US 2007/202401 A1, US 2005/019652 A1, DE 10 2015 116095 A1, US 5 582 931 A, CN 103 081 200 A, CN 101 485 033 A, US 2012/058387 A1, CN 103 959 540 A, KR 100 537 607 B1, WO 2018/174370 A1 or JP 2019 169331 A.

E.g. the document US 2007/202401 A1 teaches an electrode assembly for a secondary battery with one folded electrode stacked with opposite electrode plates, the folded electrode having bending facilitating portions, being however a row or rows of perforations.

E.g. the document JP 2019 169331 A teaches an electrode assembly for a secondary battery with one folded electrode stacked with opposite electrode plates, the folded electrode having groves as bending facilitating portions. The groves on the inner side of the bends can differ from those on the outer side in their depth to further facilitate the folding.

### SUMMARY

The present invention is defined in the present independent claims 1, resp. 10, relating to an electrode assembly for a secondary battery, resp. to a manufacturing method of such an electrode assembly.

Embodiments of the disclosure provide an electrode assembly and its forming method and a manufacturing system, a secondary battery, a battery module and a device, which can ensure that a first electrode plate and a second electrode plate are at predetermined positions after being stacked, thereby ensuring that the secondary battery has a good electrochemical performance.

In one aspect, according to embodiments of the disclosure, an electrode assembly for a secondary battery is provided, which includes:
a first electrode plate including a plurality of bending sections and a plurality of stacked first stacking sections reciprocally folded to form a zigzag shape, each bending section being configured to connect two adjacent first stacking sections, wherein the bending section includes a guiding portion for guiding the bending section to be bent during production; and a second electrode plate with a polarity opposite to that of the first electrode plate, the second electrode plate including a plurality of second stacking sections, and each second stacking section being disposed between two adjacent first stacking sections. The guiding portion comprises at least two grooves, in two adjacent bending sections, one groove disposed in one bending section is located at one side of a current collector comprised in the first electrode sheet, and the other groove disposed in the other bending section is located at the other side of the current collector so that so that all the grooves are only on the inner side of the respective bending sections after the folding of the electrode plate. The guiding portion is disposed along a first direction (X), and the first direction (X) is perpendicular to a bending direction (Z) of the bending section. One groove in the same bending section is subdivided into two sub-grooves at intervals of the first electrode plate along the bending direction (Z).

In another aspect, according to embodiments of the disclosure, a secondary battery is provided, which includes an electrode assembly according to the above embodiments.

In another aspect, according to embodiments of the disclosure, a battery module is provided, which includes a secondary battery according to the above embodiments.

In another aspect, according to embodiments of the disclosure, a device is provided, which includes a secondary battery according to the above embodiments, and the secondary battery is configured to provide electrical energy.

In another aspect, according to embodiments of the disclosure, a forming method of an electrode assembly for a secondary battery is provided, which includes following steps performed sequentially:
providing a first electrode plate, which includes a plurality of bending sections and a plurality of first stacking sections reciprocally folded to form a zigzag shape, each bending section being configured to connect two adjacent first stacking sections, wherein the bending section includes a guiding portion;
providing a second electrode plate with a polarity opposite to that of the first electrode plate, wherein the second electrode plate includes a plurality of second stacking sections, and each of the second stacking sections is disposed between two adjacent first stacking sections; and
bending the bending section along the guiding portion so that the two adjacent first stacking sections connected to the bending section are stacked,
wherein the guiding portion comprises at least two grooves, in two adjacent bending sections, one groove disposed in one bending section is located at one side of a current collector comprised in the first electrode sheet, and the other groove disposed in the other bending section is located at the other side of the current collector so that so that all the grooves are only on the inner side of the respective bending sections after the folding of the electrode plate, wherein the guiding portion is disposed along a first direction (X), and the first direction (X) is perpendicular to a bending direction (Z) of the bending section, and wherein one groove in the same bending section is subdivided into two sub-grooves at intervals of the first electrode plate along the bending direction (Z).

In another aspect, an electrode assembly manufacturing system is provided according to embodiments of the disclosure, which includes:
a first conveying mechanism for providing a first electrode plate, wherein the first electrode plate includes a plurality of bending sections and a plurality of first stacking sections, and each of the bending sections is configured to connect two adjacent first stacking sections,
a trace making mechanism for providing a guiding portion in the bending section, wherein the guiding portion is configured to guide the bending section to be bent during production;
a second conveying mechanism for providing a second electrode plate with a polarity opposite to that of the first electrode plate, wherein the second electrode plate includes a plurality of second stacking sections, and each of the second stacking sections is disposed between two adjacent first stacking sections; and
a stacking mechanism for bending the bending section along the guiding portion and stacking the two adjacent first stacking sections connected to the bending section.

The disclosure provide following beneficial effects: by providing the guiding portion at the bending section, the bending section can be bent along the guiding portion during production, which ensures that the bending section has a more accurate bending position when it is bent with respect to the first stacking section, so that the first electrode plate and the second electrode plate are at predetermined positions after being stacked, thereby ensuring that the secondary battery has a good electrochemical performance.

### BRIEF DESCRIPTION OF THE DRAWINGS

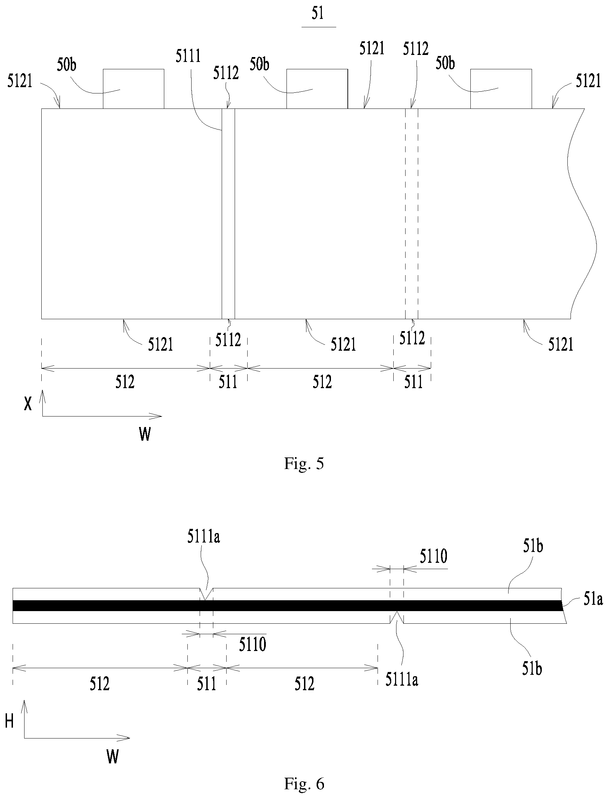

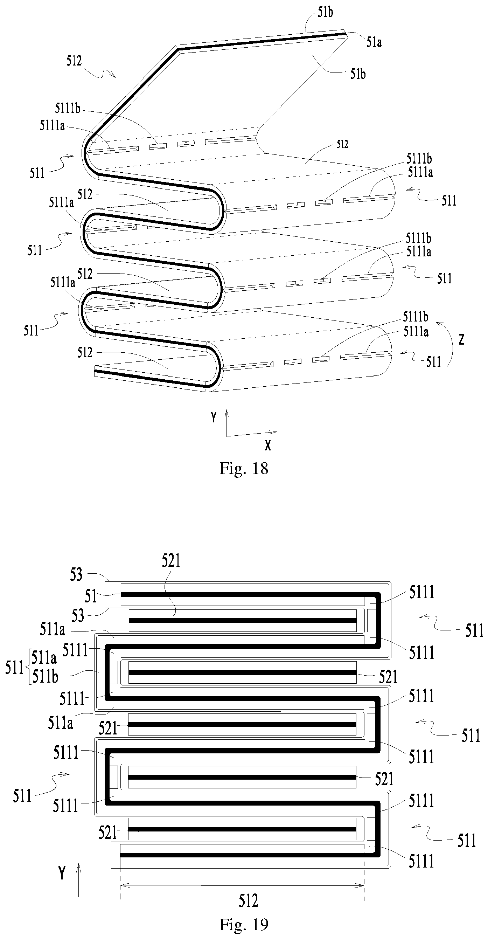

Features, advantages, and technical effects of exemplary embodiments of the disclosure will be described below with reference to accompanying drawings, whereby Fig. 19 shows an embodiment of the present invention, whereas Fig. 5-18,20 are illustrative embodiments, i.e. not fully according to the present claims but useful for understanding its context or some additional details for its preferred embodiments.
Fig. 1 is a schematic structural diagram of a vehicle disclosed in an embodiment of the disclosure;
Fig. 2 is a schematic diagram of an exploded structure of a battery pack disclosed in an embodiment of the disclosure;
Fig. 3 is a schematic diagram of a partial structure of a battery module disclosed in an embodiment of the disclosure;
Fig. 4 is a schematic diagram of an exploded structure of a secondary battery disclosed in an embodiment of the disclosure;
Fig. 5 is a partial top view structural diagram of a first electrode plate before being bent according to an embodiment of the disclosure;
Fig. 6 is a side view structural diagram of the first electrode plate of the embodiment as shown in Fig. 5;
Fig. 7 is a schematic structural view of the first electrode plate in the bent state of the embodiment as shown in Fig. 5;
Fig. 8 is a schematic diagram of a connection structure of the first electrode plate of the embodiment as shown in Fig. 5, a second electrode plate and a separator;
Fig. 9 is a side view structural diagram of an electrode assembly according to an embodiment of the disclosure;
Fig. 10 is a top view of a first structure diagram of the electrode assembly of the embodiment as shown in Fig. 9;
Fig. 11 is a top view of a second structure diagram of the electrode assembly of the embodiment as shown in Fig. 9;
Fig. 12 is a side view structural diagram of an electrode assembly according to another embodiment of the disclosure;
Fig. 13 is a schematic structural diagram of a first electrode plate in a bent state according to another embodiment of the disclosure;
Fig. 14 is a side view structural diagram of an electrode assembly including the first electrode plate of the embodiment as shown in Fig. 13;
Fig. 15 is a schematic structural diagram of a first electrode plate in a bent state according to another embodiment of the disclosure;
Fig. 16 is a schematic structural diagram of a first electrode plate in a bent state according to another embodiment of the disclosure;
Fig. 17 is a cross-sectional structural diagram of a side view of an electrode assembly including the first electrode plate of the embodiment as shown in Fig. 16;
Fig. 18 is a schematic structural diagram of a first electrode plate in a bent state according to another embodiment of the disclosure;
Fig. 19 is a side view structural diagram of an electrode assembly according to another embodiment of the disclosure;
Fig. 20 is a side view structural diagram of an electrode assembly according to another embodiment of the disclosure;
Fig. 21 is a schematic structural diagram of a stacked cell manufacturing system according to an embodiment of the disclosure;
Fig. 22 is a schematic structural diagram of a first conveying mechanism according to embodiments of the disclosure;
Fig. 23 is a schematic structural diagram of an anode electrode plate and a trace making mechanism according to embodiments of the disclosure;
Fig. 24 is a schematic diagram of an anode electrode plate with traces according to embodiments of the disclosure;
Fig. 25 is a schematic structural diagram of a second conveying mechanism according to embodiments of the disclosure;
Fig. 26 is a schematic structural diagram of a composite forming mechanism according to embodiments of the disclosure;
Fig. 27 is a schematic structural diagram of a heating conveying assembly according to embodiments of the disclosure;
Fig. 28 is a top view of the structure as shown in Fig. 27;
Fig. 29 is a schematic structural diagram of a stacking mechanism according to embodiments of the disclosure;
Fig. 30 is a bottom view of the structure as shown in Fig. 29;
Fig. 31 is a schematic diagram of a cooperation of a stacking mechanism, a main conveying mechanism and an assembly to be stacked according to embodiments of the disclosure.

The views are not necessarily plotted in actual proportion in the drawings.

Reference signs in the drawings:
1. Vehicle;
10. Battery Pack;
20. Battery Module;
30. Secondary Battery;
40. Case;
50. Electrode Assembly; 50a, Main Body; 50b, Tab;
51. First Electrode Plate; 51a, Current Collector; 51b, Electrode Active Material Layer; 511, Bending Section; 511a, Connecting Portion; 511b, Intermediate Transition Portion; 5110, Thinned Area; 5111, Guiding Portion; 5111a, Groove;
5111b, Through Hole; 5112, Second Outer Edge; 512, First Stacking Section; 5121, First Outer Edge;
52. Second Electrode Plate; 521. Second Stacking Section; 5211, Third Outer Edge;
53. Separator;
60. Top Cover Assembly; 61. Top Cover Plate; 62. Electrode Terminal;
70. Connecting Plate;
W. Extending Direction; H, Thickness Direction; X, First Direction; Y, Second Direction; Z, Bending Direction;
100. First Conveying Mechanism; 101. First Roll-Off Device; 102. First Tape Splicing Device; 103. First Tension Balancing Device; 104. First Offset Correcting Device; 105. First Dust Removing Device;
200. Separator Conveying Mechanism;
300. Trace Making Mechanism; 301. First Trace Making Component; 302. Second Trace Making Component;
400. Second Conveying Mechanism; 401. Second Roll-Off Device; 402. Second Tape Splicing Device; 403. Second Tension Balancing Device; 404. Second Offset Correcting Device; 405. Cutting Device; 406. Second Dust Removing Device; 4061, Belt Brush; 4062, Dust Suction Device;
500. Composite Forming Mechanism; 501. Heating Conveying Assembly; 5011, Heating Component; 5012, Conveying Component; 5012a, Transmission Wheel; 5012b, Transmission Belt; 502, Roller Pressing Component; 5021, Squeezing Roller; 503, Dust Removing Component;
600, Stacking Mechanism; 601, Power Source; 602, Swing Mechanism; 6021, Gap; 6022, Mounting Base; 6023, Clamping Roller; 6024, Limiting Reinforcement Roller;
700. Main Conveying Mechanism.

### DETAILED DESCRIPTION

Below, embodiments of the disclosure will be further described in detail with reference to the drawings and embodiments. The detailed description according to the embodiments and the accompanying drawings are intended to exemplary illustrate the principles of the disclosure and are not intended to limit the scope of the disclosure, i.e., the disclosure is not limited to the described embodiments.

In the description of the disclosure, it should be noted that, unless otherwise stated, the meaning of "a plurality" is two or more; the orientation or positional relationship indicated by the terms "upper", "lower", "left", "right", "inner", "outer" and the like is merely for the purpose of describing the disclosure and simplifying the description, and is not intended to indicate or imply that the device or component referred to has a particular orientation, is constructed and operated in a particular orientation, and therefore cannot be understood to be a limitation of the disclosure. Moreover, the terms "first", "second", and the like are configured for descriptive purposes only and are not to be construed as indicating or implying relative importance.

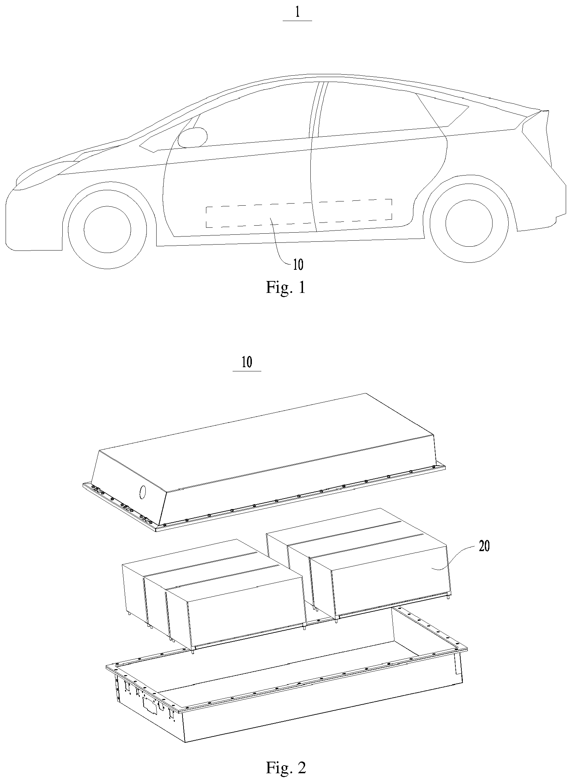

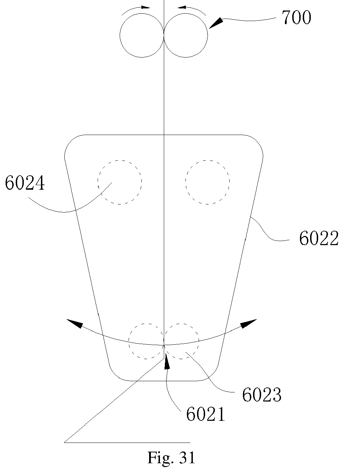

The orientations in the following description are all directions shown in the drawings and are not intended to limit specific structures of the disclosure. In the description of the disclosure, it should be noted that, unless otherwise stated, the terms "installation", "connected to", and "connected with" are to be understood broadly, and may be, for example, a fixed connection, a disassemble connection, or an integral connection; they can be connected directly or indirectly through an intermediate medium. The specific meaning of the above terms in the disclosure can be understood by the person skilled in the art according to actual circumstance. For better understanding of the disclosure, embodiments of the disclosure will be described below in detail with reference to Figs. 1 to 31.

Embodiments of the disclosure provide a device that adopts a secondary battery 30 as a power source. The device can be but not limited to a vehicle, a ship, an aircraft or the like. Referring to Fig. 1, an embodiment of the disclosure provides a vehicle 1 including a vehicle body and a battery module. The battery module is disposed in the vehicle body. Herein, the vehicle 1 may be a pure electric vehicle, a hybrid electric vehicle or an extended range vehicle. The vehicle body is provided with a drive motor electrically connected to the battery module. The battery module provides power to the drive motor. The drive motor is connected to wheels on the vehicle body through a transmission to drive the vehicle to travel. Optionally, the battery module may be horizontally disposed at a bottom of the vehicle body.

As shown in Fig. 2, the battery module may be a battery pack 10. There are various ways to construct the battery pack 10. In some optional embodiments, the battery pack 10 includes a housing and a battery module 20 disposed in the housing. The number of the battery modules 20 may be one or more. The one or more battery modules 20 are disposed in the housing. The type of the housing is not limited. The housing can be a frame-shaped housing, a plate-shaped housing, a box-shaped housing or the like. Optionally, the housing includes a lower housing for accommodating the battery module 20 and an upper housing for closing the lower housing. The upper housing and the lower housing are closed to form an accommodating portion for accommodating the battery module 20. It should be understood that the battery module may also be the battery module 20, i.e., the battery module 20 is directly disposed on the vehicle body.

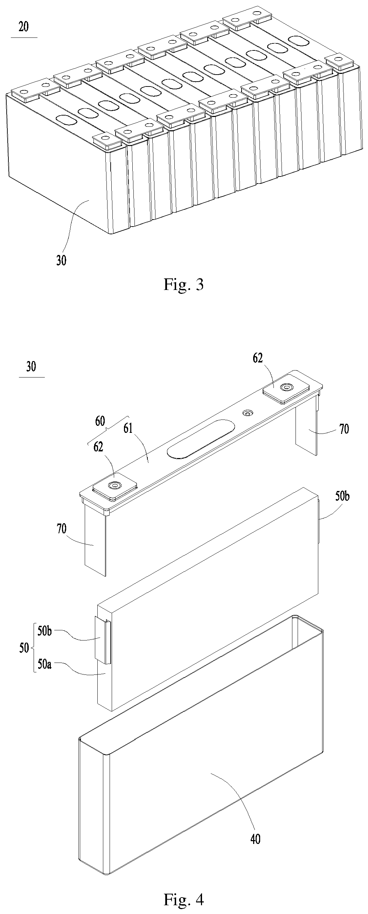

As shown in Fig. 3, the battery module 20 includes a plurality of secondary batteries 30. There are various ways to construct the battery module 20. In one embodiment, the battery module 20 includes an accommodating portion and a plurality of secondary batteries 30 located in the accommodating portion. The secondary batteries 30 are arranged side by side in the accommodating portion. There are various ways to construct the accommodating portion: for example, the accommodating portion includes a casing and a cover plate for covering the casing; or the accommodating portion includes side plates and end plates that are successively connected in a closed way; or, the accommodating portion includes two ends plates opposite to each other and a strap surrounding the end plates and the secondary batteries 30.

After noticing the problem of the poor electrochemical performance of existing secondary batteries, the inventors found that at least one of a cathode electrode plate and an anode electrode plate in a formed electrode assembly deviates from the predetermined position, which thus affects the electrochemical performance of the secondary battery. The inventors further discovered that at least one of the cathode electrode plate and the anode electrode plate in the formed electrode assembly deviates from the predetermined position, which results in lithium plating phenomenon in the electrode assembly and thereby affects the electrochemical performance of the secondary battery. It is speculated that the reason may be that a portion of the anode electrode plate extends beyond an outer edge of the cathode electrode plate but has a too small dimension or the anode electrode plate does not extend beyond the outer edge of the cathode electrode plate.

Through the analyzing an assembling process of the electrode assembly, the inventors further studied the lithium plating phenomenon and found that, by taking the anode electrode plate continuously arranged and the cathode electrode plate discontinuously arranged as an example, it is difficult for the anode electrode plate to be folded along a predetermined area during a bending process, leading to the small dimension of the portion of the anode electrode plate that extends beyond the outer edge of the cathode electrode plate after the cathode electrode plate and the anode electrode plate are stacked to form the electrode assembly, which will likely result in the lithium plating phenomenon in the electrode assembly and thereby affect the electrochemical performance and the safety performance of the secondary battery.

Based on the above problems discovered by the inventors, the inventors have improved a structure of an electrode assembly 50, and embodiments of the disclosure will be further described below.

As shown in Fig. 4, the secondary battery 30 according to an embodiment of the disclosure includes a case 40, an electrode assembly 50 disposed in the case 40, and a top cover assembly 60 sealingly connected to the case 40.

The case 40 according to the embodiment of the disclosure has a square structure or other shapes. The case 40 includes an internal space for accommodating the electrode assembly 50 and electrolyte, and an opening communicating with the internal space. The case 40 may be made of materials such as aluminum, aluminum alloy, or plastic.

The top cover assembly 60 according to embodiments of the disclosure includes a top cover plate 61 and electrode terminals 62. The top cover plate 61 according to embodiments of the disclosure includes an outer surface and an inner surface opposite to each other, and an electrode lead-out hole through the outer and inner surfaces. The top cover plate 61 can cover the opening of the case 40 and be sealingly connected to the case 40. The inner surface of the top cover plate 61 faces the electrode assembly 50. The electrode terminal 62 is disposed in the top cover plate 61 and disposed corresponding to the electrode lead-out hole. Apart of the electrode terminal 62 is exposed from the outer surface of the top cover plate 61 and is configured to be welded with a busbar. The electrode assembly 50 according to embodiments of the disclosure includes a main body 50a and tabs 50b extending from the main body 50a. In embodiments of the disclosure, from each of two opposite end faces of the main body 50a, one tab 50b extends. In some other embodiments, two tabs 50b extend from one of the two opposite end faces of the main body 50a. The two tabs 50b have opposite polarities, one of the two tabs is a negative tab and the other is a positive tab. A positive active material is coated on a coating region of the anode electrode plate, while a negative active material is coated on a coating region of the cathode electrode plate. A plurality of uncoated regions extending from the coating regions of the main body 50a are serve as tabs 50b. The positive tab extends from the coating region of the anode electrode plate while the negative tab extends from the coating region of the cathode electrode plate. Connecting plates 70 are configured to connect the tabs 50b of the electrode assembly 50 and the electrode terminals 62.

In an embodiment, Fig. 5 schematically shows a partial structure of a first electrode plate 51 in an unfolded state. As shown in Fig. 5, the first electrode plate 51 includes a plurality of bending sections 511 and a plurality of first stacking sections 512, wherein the bending section 511 after being bent is at least partially in a bent state. The first electrode plate 51 has a continuously extending structure as a whole. Along an extending direction W of the first electrode plate 51, the bending sections 511 and the first stacking sections 512 are alternately disposed. Each bending section 511 connects two adjacent first stacking sections 512. Along a first direction X, each first stacking section 512 includes two opposite first outer edges 5121, and each bending section 511 includes two opposite second outer edges 5112. The first direction X is the same as a width direction of the first electrode plate 51. The first direction X is perpendicular to the extending direction W. In the embodiment, along the first direction X, the first outer edges 5121 and the second outer edges 5112 on a same side are flush with each other. The first electrode plate 51 also includes tabs 50b extending beyond the first outer edges 5121 of the first stacking section 512 along the first direction X. The number and positions of the tabs 50b are arranged in one-to-one correspondence with the number and positions of the first stacking sections 512. In the embodiment, the first electrode plate 51 includes a guiding portion 5111 disposed in the bending section 511. The number of the guiding portions 5111 may be the same as the number of the bending sections 511. It should also be understood that some bending sections 511 of all the bending sections 511 may be provided with the guiding portions 5111, while the other bending sections 511 may not be provided with the guiding portions 5111. The guiding portion 5111 is configured to guide the bending section 511 to be bent during production. In a production process, when an external force is applied to the first electrode plate 51 to perform a bending process, since the bending section 511 is provided with the guiding portion 5111, it is easier for the bending section 511 to be bent at an area where the guiding portion 5111 is located, which accordingly facilitates improving a controllability and an accuracy of a bending position, thereby ensuring that the first electrode plate 51 and the second electrode plate 52 are located at respective predetermined positions so as to ensure that the secondary battery 30 has a good electrochemical performance.

Fig. 6 schematically shows a side view structure of the first electrode plate 51 according to the embodiment as shown in Fig. 5. The first electrode plate 51 includes a current collector 51a and electrode active material layer 51b coated on the current collector 51a. The current collector 51a includes two surfaces opposite to each other in a thickness direction H of the first electrode plate 51. Two electrode active material layers 51b are respectively disposed on the two surfaces. In an example, when the first electrode plate 51 is a cathode electrode plate, a material of the current collector 51a is a metal material such as aluminum or aluminum alloy. When the first electrode plate 51 is an anode electrode plate, a material of the current collector 51a is a metal material such as copper or copper alloy. The guiding portion 5111 may be a trace left by things. Optionally, it may refer to a structure formed by removing a part of the electrode active material layer 51b from the first electrode plate 51 through a material removing component, or a structure formed by removing a part of the electrode active material layer 5 1b and a part of the current collector 51a from the first electrode plate 51.

In the embodiment, each bending section 511 is provided with a guiding portion 5111. In the embodiment, the guiding portion 5111 includes a groove 5111a. The groove 5111a is recessed and extends from a surface of the first electrode plate 51 in the thickness direction H of the first electrode plate 51 along a direction approaching the current collector 51a. Among two adjacent bending sections 511, a groove 5111a disposed in one bending section 511 is located at one side of the current collector 51a, and a groove 5111a disposed in the other bending section 511 is located at the other side of the current collector 51a. The groove 5111a may be formed by removing a part of the electrode active material layer 51b from the first electrode plate 51. Alternatively, when the electrode active material is coated on the current collector 51a, less electrode active material is coated at a corresponding position to form the groove 5111a. In the embodiment, along the thickness direction H, a depth of the groove 5111a may be equal to a thickness of the electrode active material layer 51b. The groove 5111a extends to a surface of the current collector 51a, but does not extend into the current collector 51a. However, it should be understood that the depth of the groove 5111a may be less than the thickness of the electrode active material layer 51b, so that the groove 5111a does not pass through the electrode active material layer 51b in the thickness direction H; and in this case, there is a part of the electrode active material between the groove 5111a and the current collector 51a. In the embodiment, since the depth of the groove 5111a is less than or equal to the thickness of the electrode active material layer 51b, the current collector 51a will not be damaged when the groove 5111a is formed, and compared to a case where the depth of the groove 5111a is greater than the thickness of the electrode active material layer 51b (in this case, the current collector 51a will be damaged), a strength of the current collector 51a will not be affected. In the embodiment, a mouth of the groove 5111a is greater than or equal to a bottom of the groove 5111a. In an example, a projection of the groove 5111a on a plane perpendicular to the first direction X has a V-shape. However, the projection of the groove 5111a is not limited to a V shape, and may also have a U shape or a rectangular shape. Since the mouth of the groove 5111a is greater than or equal to the bottom of the groove 5111a, on one hand, it facilitates ensuring the bending position of the bending section 511 and enabling easy forming of the groove 5111a; and on the other hand, the electrode active material near the mouth of the groove 5111a is subjected to a small compression stress or no compression stress during the bending process, so that a bending resistance of the first stacking section 512 is reduced, and thereby the first stacking section 512 can be more easily and more accurately bent to a predetermined position. In the embodiment, the first electrode plate 51 further includes a thinned area 5110 disposed in the bending section 511, and the thinned area 5110 is disposed corresponding to the groove 5111a along the thickness direction H of the first electrode plate 51. A thickness of the first electrode plate 51 at the thinned area 5110 is smaller than a thickness of the first electrode plate 51 outside the thinned area 5110. At this time, because a rigidity of the thinned area 5110 is less than a rigidity of the first electrode plate 51 outside the thinned area 5110, the bending section 511 can be more easily bent at the thinned area 5110, which facilitates enabling first outer edges 5121 of two adjacent first stacking sections 512 on a same side to be aligned.

In the embodiment as shown in Figs. 5 and 6, in the extending direction W of the first electrode plate 51, a thickness of the thinned area 5110 increases from a central area to two side areas. Along the first direction X, the groove 5111a extends to two opposite second outer edges 5112 of the bending section 511 to pass through the entire bending section 511; and compared with a case where the groove 5111a does not pass through the entire bending section 511, the electrode active material near the groove 5111a is subjected to a small compression stress or no compression stress during the bending process, so that the bending resistance of the first stacking section 512 is reduced, which thereby can better ensure the accuracy of the bending position of the bending section 511 and then ensure that the first stacking section 512 can be more easily and accurately bent to the predetermined position. In the embodiment, the bending section 511 includes a part of the electrode active material layer 51b. A part of one of the two electrode active material layers 51b corresponding to the thinned area 5110 is not completely removed, and a part of the other layer corresponding to the thinned area 5110 may be or may not be completely removed. In the embodiment, along the extending direction W of the first electrode plate 51, an opening size of the groove 5111a is smaller than a size of the bending section 511, so that other areas of the bending section 511 except the guiding portion 5111 are covered by the electrode active material layers 51b. In an example, both parts of the two electrode active material layers 51b corresponding to the thinned area 5110 are completely removed.

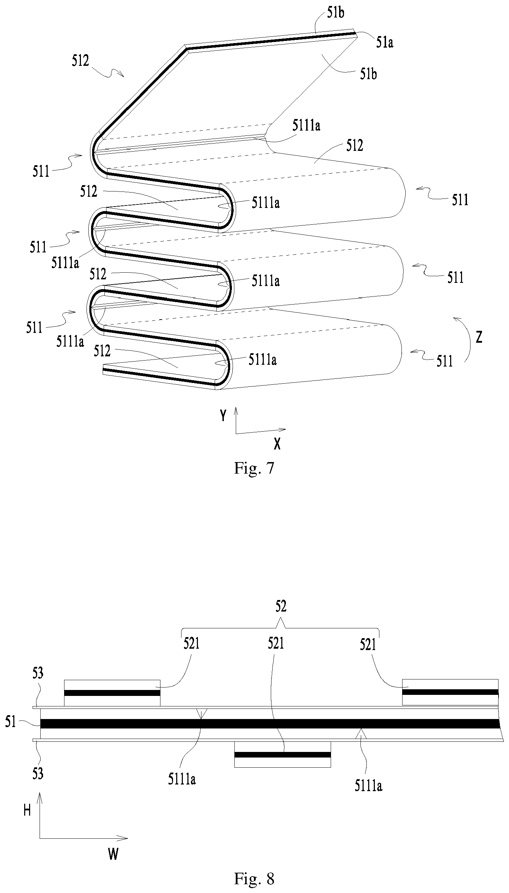

A size of the guiding portion 5111 in the first direction X is set according to a size of the bending section 511 in the first direction X. The size of the guiding portion 5111 in the first direction X is a length of the guiding portion 5111. The size of the bending section 511 in the first direction X is also a length of the bending section 511. Therefore, in some other embodiments, the groove 5111a does not pass through the bending section 511 along the first direction X. A ratio of the size of the groove 5111a in the first direction X to the size of the bending section 511 in the first direction X is from 0.4 to 0.8, preferably 0.4, 0.5, 0.6, 0.7 or 0.8. Fig. 7 schematically shows a structure of the first electrode plate 51 according to the embodiment as shown in Fig. 5 in a multiple reciprocally folded state. During a manufacturing process of an electrode assembly 50, a first electrode plate 51 should be bent. During production, the guiding portion 5111 can guide the bending section 511 to be bent, i.e., the bending section 511 can be bent along the guiding portion 5111, so that the bending position can be located at a predetermined position, which facilitates ensuring first outer edges 5121 of two adjacent first stacking sections 512 on a same side to be aligned. The bending section 511 of the first electrode plate 51 is bent along a bending direction Z as shown in Fig. 7. The bending direction Z and the first direction X are perpendicular to each other, i.e., a plane in which the bending direction Z is located is perpendicular to the first direction X. In the embodiment, the first electrode plate 51 can be bent reciprocally in a substantially zigzag shape. Dashed lines as shown in Fig. 7 do not indicate a physical structure, but schematically show separation lines between the bending sections 511 and the first stacking sections 512. Since two adjacent grooves 5111a are located at two opposite surfaces of the first electrode plate 51, and the groove 5111a is located at a side that bears a compression stress when the bending section 511 is being bent, after the first electrode plate 51 has been folded, an opening of the groove 5111a at the bending section 511 faces a space formed between two adjacent first stacking sections 512, i.e., the groove 5111a is located at an inner surface of the bending section 511, so that a side of the thinned area 5110 close to the groove 5111a does not bear a tensile stress, which reduces a possibility that the thinned area 5110 will be broken under the tensile stress. After the first electrode plate 51 has been folded, two adjacent first stacking sections 512 are stacked and spaced apart along the second direction Y, and the space formed between the two adjacent first stacking sections 512 is configured to accommodate the second stacking section 521 of the second electrode plate 52. The second direction Y is the same as a stacking direction of the first stacking sections 512 and is perpendicular to the first direction X. In the embodiment, the bending section 511 after being bent has an arc shape, for example, it may have a circular arc shape.

In the embodiment shown in Fig. 8, based on the first electrode plate 51, in the thickness direction H of the first electrode plate 51, separators 53 are respectively disposed on two opposite sides of the first electrode plate 51. The two separators 53 are disposed in a pair, and the first electrode plate 51 is disposed between the two separators 53. The separator 53 covers the first stacking section 512 and the bending section 511. Along the first direction X as shown in Fig. 5, at least some of the tabs 50b extend beyond an edge of the separator 53. In the production process, the two separators 53 are attached to the first electrode plate 51 through a corresponding feeding equipment. A second electrode plate 52 is disposed on a side of the separator 53 away from the first electrode plate 51. The first electrode plate 51 and the second electrode plate 52 have opposite polarities, and when one of them is a cathode electrode plate, the other is an anode electrode plate. The second electrode plate 52 includes a plurality of second stacking sections 521. In the embodiment, two adjacent second stacking sections 521 are respectively disposed on opposite sides of the first electrode plate 51. Along the thickness direction H, the first stacking section 512 and the second stacking section 521 are disposed corresponding to each other. In the embodiment, between two adjacent bending sections 511, a second stacking section 521 is disposed. However, the disclosure is not limited to a case where a second stacking section 521 is disposed between two adjacent bending sections 511, and may also provide a suitable number of second stacking sections 521 according to product requirements. In one example, after a separator 53 has been disposed on the first electrode plate 51, the second stacking section 521 is attached to the separator 53. For example, the second stacking section 521 and the separator 53 may be connected by hot pressing, electrophoresis, or bonding. The separator 53 is an insulator interposed between the first electrode plate 51 and the second electrode plate 52. A material of the separator 53 may be an insulating material such as plastic to insulate and isolate the first electrode plate 51 from the second electrode plate 52.

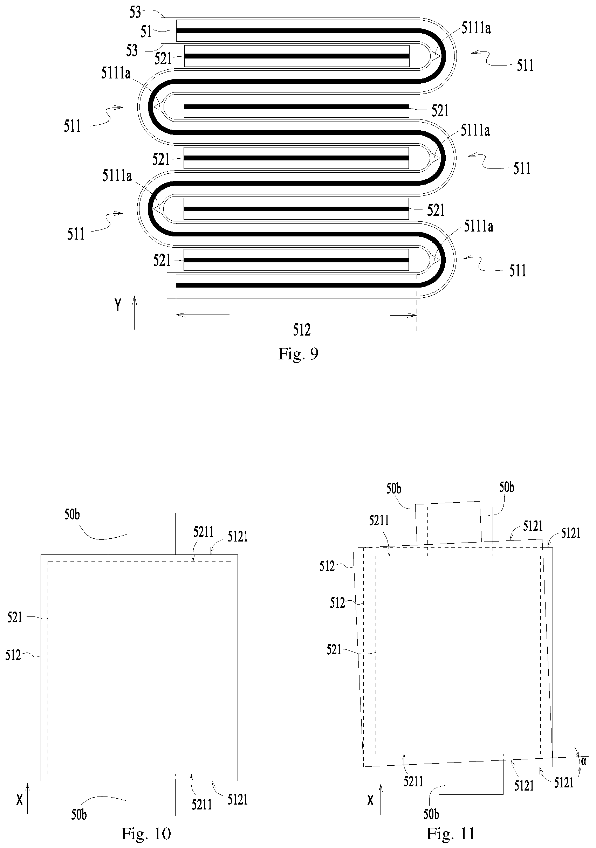

Fig. 9 schematically shows a side view structure of an electrode assembly 50 according to an embodiment. After the first electrode plate 51, the separator 53, and the second electrode plate 52 have been combined in a way as shown in Fig. 8, the bending section 511 is bent under the guidance of the guiding portion 5111, and finally a folded state as shown in Fig. 9 is formed. In the second direction Y, a second stacking section 521 is disposed between two adjacent first stacking sections 512, so that the first stacking sections 512 and the second stacking section 521 are alternately arranged in sequence. In the second directionY, the bending section 511 and the second stacking section 521 do not overlap each other. In the embodiment, the bending section 511 is completely in a bent state, and a starting line of the bending section 511 is an area where the bending section 511 starts to be bent with respect to the first stacking section 512. There is an interval between the bending section 511 and the second stacking section 521; and then both edges of the first stacking section 512 in the extending direction W extend beyond the second stacking section 521, and an end of the second stacking section 521 facing the bending section 511 along the extending direction W is not in contact with the bending section 511, which thereby reduces a possibility that the electrode active material drops in powder form or falls off due to an interference of the end of the second stacking section 521 with the bending section 511. After the first electrode plate 51 has been bent, the groove 5111a at each bending section 511 is located on the inner surface of the bending section 511, i.e., after the first electrode plate 51 has been bent, grooves 5111a at respective bending sections 511 are all located on a side of the current collector 51a close to the second stacking section 521. Here, the inner surface refers to a surface of the bending section 511 close to the second stacking section 521. Correspondingly, an outer surface of the bending section 511 refers to a surface of the bending section 511 away from the second stacking section 521. In the embodiment, the guiding portion 5111 at the bending section 511 after being bent is disposed corresponding to a middle area of the second stacking section 521.

Fig. 10 schematically shows a top view structure after the first stacking section 512 and the second stacking section 521 are stacked with respect to each other. In the embodiment, the first electrode plate 51 is an anode electrode plate, and the second electrode plate 52 is a cathode electrode plate. Under the guidance of the guiding portion 5111 at the bending section 511, after the first electrode plate 51 is reciprocally folded, circumferential edges of the first stacking section 512 all extend beyond the second stacking section 521, so as to ensure that the entire second stacking section 521 is covered by the first stacking sections 512, which effectively reduces a possibility that lithium plating phenomenon is caused as the second stacking section 521 extends beyond the first stacking section 512. Here, a case where the entire second stacking section 521 is covered by the first stacking section 512 means that an orthographic projection of the second stacking section 521 in the second directionY is completely within an orthographic projection of the first stacking section 512 in the second direction Y, and then a projection area of the second stacking section 521 is smaller than a projection area of the first stacking section 512. In an example, a distance between a first outer edge 5121 of the first stacking section 512 and a corresponding third outer edge 5211 of the second stacking section 521 is greater than or equal to 0.2 mm and less than or equal to 5 mm, preferably 0.5 mm, 1mm, 1.5mm, 2mm, 2.5mm, 3mm, 3.5mm, 4mm or 4.5mm. Since the bending section 511 includes the guiding portion 5111, the first electrode plate 51 is bent under the guidance of the guiding portion 5111, so that respective first outer edges 5121 on a same side of two adjacent first stacking sections 512 connected to the bending section 511 are aligned, i.e., two first outer edges 5121 of two adjacent first stacking sections 512 on the same side have an angle α. Here, a case where the first outer edges 5121 of the two adjacent first stacking sections 512 are aligned includes a state as shown in Fig. 10, i.e., along the second direction Y, projections of the two adjacent first stacking sections 512 coincide with each other. The angle α between the two first outer edges 5121 of the two adjacent first stacking sections 512 on the same side is 0°, so that in a top view, the respective first outer edges 5121 of the two adjacent first stacking sections 512 are consistent with each other and are aligned. The case where the respective first outer edges 5121 of the two adjacent first stacking sections 512 are aligned may also include a state as shown in Fig. 11. Fig. 11 schematically shows another top view structure after the first stacking section 512 and the second stacking section 521 have been stacked with respect to each other. The two first outer edges 5121 of the two adjacent first stacking sections 512 on the same side in the top view are not completely aligned. The two first outer edges 5121 of the two adjacent first stacking sections 512 on the same side have an angle α. The angle α is greater than 0° and less than or equal to 30° to ensure that the first stacking section 512 covers the second stacking section 521. Preferably, the angle α is 5°, 10°, 15°, 20° or 25°. Here, the angle α is an angle with an allowable error. When a first outer edge 5121 of a first stacking section 512 after being bent is deviated so that it fails to coincide with a first outer edge 5121 of another first stacking section 512, but it can still be ensured that the first stacking section 512 covers a second stacking section 521, an angle between two first outer edges 5121 of two adjacent first stacking sections 512 on a same side is referred to as an angle with an allowable error.

For the first electrode plate 51 according to the embodiment of the disclosure, since the bending section 511 includes the guiding portion 5111, when the first electrode plate 51 is being bent during the production process of the electrode assembly 50, it is easier for the first electrode plate 51 to be bent at an area where the guiding portion 5111 of the bending section 511 is located under the guidance of the guiding portion 5111, which accordingly facilitates improving a controllability and an accuracy of a bending position of the bending section 511 by providing the guiding portion 5111, thereby improving an alignment of the first outer edges 5121 of the two adjacent first stacking sections 512, reducing a possibility that one of the first stacking section 512 and the second stacking section 521 serving as a negative electrode cannot completely cover the other of the first stacking section 512 and the second stacking section 521 serving as a positive electrode due to a randomness of the bending position of the first electrode plate 51 after being bent, and reducing a possibility that lithium plating phenomenon occurs in the manufactured electrode assembly 50. Furthermore, the electrode active material layer 51b coated on the current collector 51a has a certain brittleness. During the bending process of the bending section 511, the electrode active material layer 51b will be subjected to an external force, so that the electrode active material layer 51b may fall off or drop in powder form from the current collector 51a, which affects an electrochemical performance and a safety performance of the electrode assembly 50. The groove 5111a according to the disclosure is formed by reducing the corresponding electrode active material, so that during the bending process of the bending section 511, the disposed groove 5111a facilitates reducing an internal stress suffered by the corresponding electrode active material layer 51b, thereby reducing a possibility that the electrode active material layer 51b will drop in powder form or fall off.

In some other embodiments, the same structure as the embodiments as shown in Fig.7 and Fig. 9 will not be repeated here, and the description here will mainly focus on differences from the embodiments as shown in Fig. 7 and Fig. 9. In the embodiment, a groove 5111a of one of two adjacent bending sections 511 is located on one surface of a first electrode plate 51, and a groove 5111a of the other of the two adjacent bending sections 511 is located on the other surface of the first electrode plate 51; and therefore, for the first electrode plate 51 after being bent, a guiding portion 5111 at the bending section 511 faces away from a space formed between two adjacent first stacking sections 512, i.e., being located on an outer surface of the bending section 511, so that the groove 5111a is located at a side of the bending section 511 that bears a tensile stress when the bending section 511 is being bent.

In some other embodiments, the same structure as the embodiment as shown in Fig. 9 will not be repeated here, and the description here will mainly focus on differences from the embodiment as shown in Fig. 9. In the embodiment, each bending section 511 is provided with a guiding portion 5111. Grooves 5111a of respective guiding portions 5111 at two adjacent bending sections 511 are located on a same surface of the first electrode plate 51, thus in the first electrode plate 51 after being bent, a groove 5111a at one of the two adjacent bending sections 511 is located on an outer surface of the bending section 511 so as to face away from a space formed between two adjacent first stacking sections 512, and a groove 5111a at the other bending section 511 is located on an inner surface of the bending section 511 so as to face the space formed between the two adjacent first stacking sections 512. In the embodiment, in a manufacturing process of the first electrode plate 51, it is only needed to form respective grooves 5111a on a same surface of the first electrode plate 51, which facilitates reducing a processing difficulty of the first electrode plate 51.

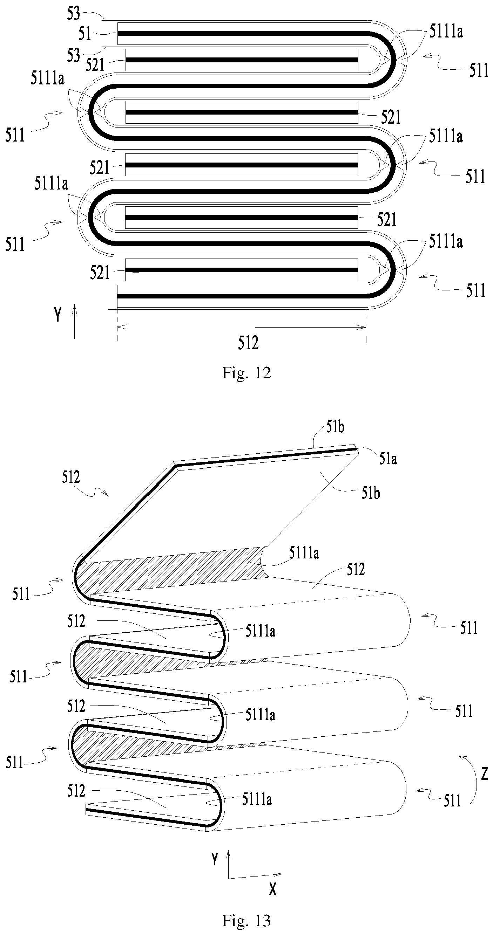

Fig. 12 schematically shows a side view structure of an electrode assembly 50 according to another embodiment of the disclosure. In some other embodiments as shown in Fig. 12, the same structure as the embodiment as shown in Fig. 9 will not be repeated here, and the description here will mainly focus on differences from the embodiment as shown in Fig. 9. In the embodiment, each bending section 511 is correspondingly provided with a guiding portion 5111. One guiding portion 5111 includes two grooves 5111a. When the first electrode plate 51 is in an unfolded state, the two grooves 5111a are correspondingly disposed along the thickness direction H of the first electrode plate 51. In the first electrode plate 51 after being bent, one of the two grooves 5111a is disposed on an outer surface of the bending section 511 so as to face away from a space formed between two adjacent first stacking sections 512, and the other is disposed on an inner surface of the bending section 511 so as to face the space formed between the two adjacent first stacking sections 512. In the embodiment, for each bending section 511, the two grooves 5111a are disposed in the thickness direction H, and then the thinned area 5110 has a smaller thickness, which facilitates further reducing a rigidity of the thinned area 5110. In this way, since the thinned area 5110 corresponding to the two grooves 5111a has a smaller rigidity, it is easier for the bending section 511 to be bent at an area where the thinned area 5110 is located, which facilitates further improving a controllability and an accuracy of the bending position. In this way, as compared to the bending section 511 having no groove 5111a, internal stresses of the electrode active material layers 51b on both sides according to the embodiment will be relatively small when being bent, which facilitates further reducing a bending difficulty and a possibility that the electrode active material layer 51b may fall off or drop in powder form from the current collector 51a due to tensile or compression stress. In one example, the two grooves 5111a have same structures.

In some other embodiments, the same structure as the embodiment as shown in Fig. 9 will not be repeated here, and the description here will mainly focus on differences from the embodiment as shown in Fig. 9. In the embodiment, the guiding portion 5111 includes a groove 5111a. The groove 5111a extends from an inner surface of the bending section 511 toward the current collector 51a. An opening of the groove 5111a faces the second stacking section 521. The groove 5111a passes through the inner electrode active material layer 51b and a part of the current collector 51a along the thickness direction H of the first electrode plate 51. In one example, at least one of a metal cutter, a laser cutter, and a liquid etching tool is adopted to form the groove 5111a. Therefore, in the embodiment, a part of the groove 5111a is allowed to be formed in the current collector 51a, so as to ensure that electrode active material in a corresponding area can be removed while processing accuracy requirements and a processing difficulty can also be reduced. Furthermore, since a part of the current collector 51a is removed to form a part of the groove 5111a, which thereby facilitates further reducing the rigidity of the thinned area 5110 disposed corresponding to the groove 5111a and enabling the bending section 511 to be more easily bent at the guiding portion 5111. In other embodiments, the groove 5111a extends from an outer surface of the bending section 511 away from the second stacking section 521 toward the current collector 51a. The opening of the groove 5111a is located at the outer surface of the bending section 511, so that the opening of the groove 5111a faces away from the second stacking section 521. The groove 5111a passes through the outer electrode active material layer 51b and a part of the current collector 51a along the thickness direction H of the first electrode plate 51.

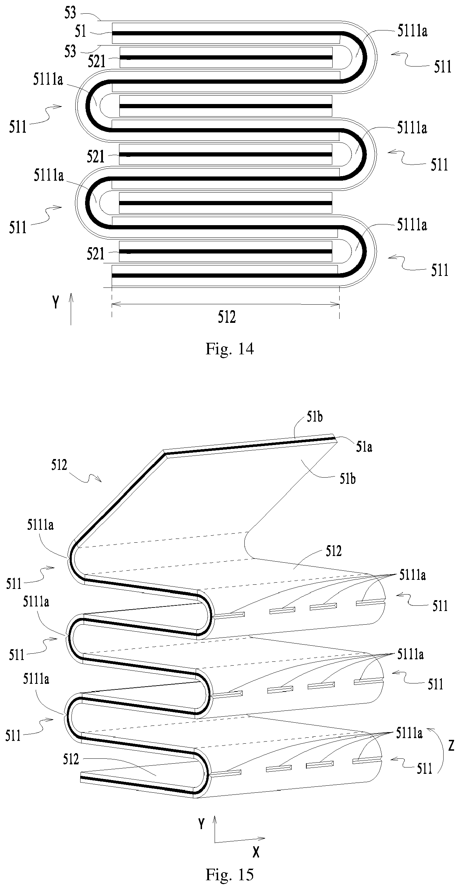

Fig. 13 schematically shows a structure of a first electrode plate 51 according to another embodiment of the disclosure in a multiple reciprocally folded state. Fig. 14 schematically shows a side view structure of an electrode assembly 50 according to another embodiment of the disclosure. The first electrode plate 51 according to the embodiment as shown in Fig. 14 is the first electrode plate 51 according to the embodiment as shown in Fig. 13. In the embodiments as shown in Fig. 13 and Fig. 14, the same structure as the embodiment as shown in Fig. 9 will not be repeated here, and the description here will mainly focus on differences from the embodiment as shown in Fig. 9. In the embodiment, the guiding portion 5111 includes a groove 5111a. The groove 5111a is recessed and extends from an inner surface of the bending section 511 toward the current collector 51a. An opening of the groove 5111a faces the second stacking section 521. The groove 5111a passes through the inner electrode active material layer 51b along the thickness direction H of the first electrode plate 51, and along the extending direction W of the first electrode plate 51, a size of the groove 5111a is equal to a size of the bending section 511. A portion of the inner electrode active material layer 51b corresponding to the bending section 511 is completely removed so that a surface of the current collector 51a facing the second stacking section 521 is exposed. A portion of the outer electrode active material layer 51b corresponding to the bending section 511 is not removed but entirely remains. Since the inner electrode active material layer 51b at the bending section 511 is completely removed, the rigidity of the bending section 511 can be further reduced, so that it is easier for the bending section 511 to be bent at the guiding portion 5111, and it also effectively avoids a case where the inner electrode active material layer 51b falls off or drops in powder form after the bending section 511 has been bent. In some other embodiments, the portion of the outer electrode active material layer 51b corresponding to the bending section 511 may be partially removed to form the guiding portion 5111 on the outer electrode active material layer 51b.

In some other embodiments, the same structure as the embodiment as shown in Fig. 14 will not be repeated here, and the description here will mainly focus on differences from the embodiment as shown in Fig. 14. In the embodiment, the guiding portion 5111 includes a groove 5111a. The groove 5111a extends from the outer surface of the bending section 511 toward the current collector 51a. An opening of the groove 5111a faces away from the second stacking section 521. The groove 5111a passes through the outer electrode active material layer 51b along the thickness direction H of the first electrode plate 51, and along the extending direction W of the first electrode plate 51, a size of the groove 5111a is equal to a size of the bending section 511. The portion of the outer electrode active material layer 51b corresponding to the bending section 511 is completely removed, so that the surface of the current collector 51a facing away from the second stacking section 521 is exposed. The portion of the inner electrode active material layer 51b corresponding to the bending section 511 is not removed but entirely remains. In some other embodiments, the portion of the inner electrode active material layer 51b corresponding to the bending section 511 may also be partially removed to form the groove 5111a on the inner electrode active material layer 51b. Since the electrode active material layer 51b on the outer side of the bending section 511 is completely removed, the rigidity of the bending section 511 can be further reduced, so that it is easier for the bending section 511 to be bent at the guiding portion 5111, and it also effectively avoids a case where the outer electrode active material layer 5 1b falls off or drops in powder form after the bending section 511 has been bent.

Fig. 15 schematically shows a structure of a first electrode plate 51 according to another embodiment of the disclosure in a multiple reciprocally folded state. In the embodiment as shown in Fig. 15, the same structure as the embodiment as shown in Fig. 7 will not be repeated here, and the description here will mainly focus on differences from the embodiment as shown in Fig. 7. In the embodiment, the guiding portion 5111 includes two or more grooves 5111a. Along the first direction X, the two or more grooves 5111a are spaced apart. In the embodiment, when the first electrode plate 51 is in an unfolded state, along the thickness direction H of the first electrode plate 51, thinned areas 5110 are disposed corresponding to the grooves 5111a. The number and positions of the thinned areas 5110 are arranged in one-to-one correspondence with the number and positions of the grooves 5111a. In the embodiment, a projection of the groove 5111a on a plane perpendicular to the first direction X may have a triangle shape. However, the projection of the groove 5111a is not limited to a triangle shape, and may also have a trapezoid shape or a rectangular shape. Each groove 5111a extends from the outer surface of the bending section 511 toward the current collector 51a, so that the opening of the groove 5111a faces away from the second stacking section 521. A ratio of a sum of sizes of respective grooves 5111a in the first direction X to a size of the bending section 511 in the first direction X is 0.4 to 0.8, preferably 0.4, 0.5, 0.6, 0.7 or 0.8. In some other embodiments, each groove 5111a extends from the inner surface of the bending section 511 toward the current collector 51a, so that the opening of the groove 5111a faces the second stacking section 521. In some other embodiments, a plurality of grooves 5111a are disposed on the inner surface of the bending section 511, and a plurality of grooves 5111a are disposed on the outer surface of the bending section 511. In one example, when the first electrode plate 51 is in the unfolded state, along the thickness direction H of the first electrode plate 51, the grooves 5111a on the inner surface and the grooves 5111a on the outer surface are located corresponding to each other. The positions of the thinned areas 5110, the positions of the grooves 5111a on the inner surface and the positions of the groove 5111a on the outer surface are arranged in a one-to-one correspondence. A groove 5111a on the inner surface and a groove 5111a on the outer surface jointly and correspondingly provide a thinned area 5110.

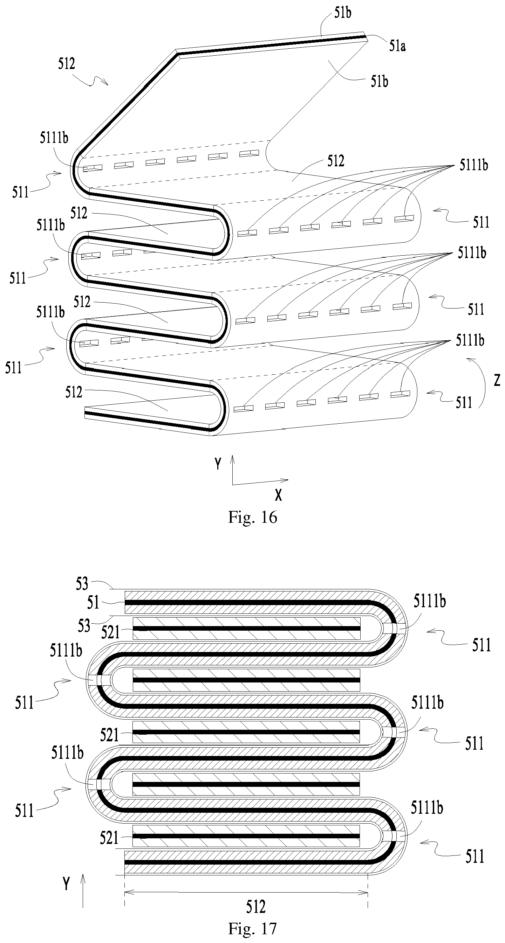

Fig. 16 schematically shows a structure of a first electrode plate 51 according to another embodiment of the disclosure in a multiple reciprocally folded state. In the embodiment as shown in Fig. 16, the same structure as the embodiment as shown in Fig. 7 will not be repeated here, and the description here will mainly focus on differences from the embodiment as shown in Fig. 7. In the embodiment, the guiding portion 5111 includes two or more through holes 5111b. Along the first direction X, two or more through holes 5111b are disposed at intervals. When the first electrode plate 51 is in an unfolded state, along the thickness direction H of the first electrode plate 51, the through hole 5111b passes through the two electrode active material layers 51b and the current collector 51a. In the unfolded state of the first electrode plate 51, a size of the through hole 5111b in the extending direction W of the first electrode plate 51 is smaller than a size of the bending section 511 in the extending direction W of the first electrode plate 51. In an example, a shape of the through hole 5111b may be a rectangular shape, a square shape, an ellipse shape, a trapezoid shape, or a triangle shape. In the embodiment, a ratio of a sum of sizes of respective through holes 5111b in the first direction X to a size of the bending section 511 in the first direction X is 0.4 to 0.8, preferably 0.6 or 0.7.

In one embodiment, the guiding portion 5111 includes a through hole 5111b. A ratio of a size of the through hole 5111b in the first direction X to a size of the bending section 511 in the first direction X is 0.4 to 0.8, preferably 0.6 or 0.7.

Fig. 17 schematically shows a side cross-sectional structure of an electrode assembly 50 according to another embodiment of the disclosure. The first electrode plate 51 included in the electrode assembly 50 is the first electrode plate 51 according to the embodiment as shown in Fig. 16. In the embodiment, the through hole 5111b at the bending section 511 after being bent is disposed corresponding to a middle area of the second stacking section 521. However, the disclosure does not limit the position of the through hole 5111b, and the position of the through hole 5111b can also be disposed corresponding to other areas of the second stacking section 521 that deviate from the middle area along the second direction Y

Fig. 18 schematically shows a structure of a first electrode plate 51 according to another embodiment of the disclosure in a multiple reciprocally folded state. In the embodiment as shown in Fig. 18, the same structure as the embodiment as shown in Fig. 7 will not be repeated here, and the description here will mainly focus on differences from the embodiment as shown in Fig. 7. In the embodiment, the guiding portion 5111 includes two or more grooves 5111a and two or more through holes 5111b. Along the first direction X, one or more grooves 5111a may be disposed between two adjacent through holes 5111b. Alternatively, one or more through holes 5111b may be disposed between two adjacent grooves 5111a. In some other embodiments, the guiding portion 5111 may include any other number of grooves 5111a and any other number of through holes 5111b as needed. In an example, the guiding portion 5111 may include a groove 5111a and a through hole 5111b. As shown in Fig.18, at one bending section 511 of two adjacent bending sections 511, each groove 5111a extends from an outer surface of the bending section 511 toward the current collector 51a, so that an opening of the groove 5111a faces away from the second stacking section 521; and at the other bending section 511, each groove 5111a extends from an inner surface of the bending section 511 toward the current collector 51a, so that an opening of the groove 5111a faces the second stacking section 521. It should be understood that, in other embodiments, each groove 5111a at each bending section 511 extends from the outer surface of the bending section 511 toward the current collector 51a, so that the opening of the groove 5111a face away from the second stacking section 521. Alternatively, each groove 5111a at each bending section 511 extends from the inner surface of the bending section 511 toward the current collector 51a, so that the opening of the groove 5111a faces the second stacking section 521.

Fig. 19 schematically shows a side view structure of an electrode assembly 50 according to another embodiment of the disclosure, according to the presently claimed invention,

In the embodiment as shown in Fig. 19, the same structure as the embodiment as shown in Fig. 9 will not be repeated here, and the description here will mainly focus on differences from the embodiment as shown in Fig. 9. In the embodiment, a bending section 511 includes two connecting portions 511a and an intermediate transition portion 511b connecting the two connecting portions 511a. The intermediate transition portion 511b is substantially perpendicular to the connecting portion 511a, and the intermediate transition portion 511b is substantially perpendicular to the first stacking section 512. The two connecting portions 511a of the bending section 511 are respectively connected to two adjacent first stacking sections 512. As shown in Fig. 19, the connecting portion 511a is flush with the first stacking section 512. Each bending section 511 is provided with two guiding portions 5111. When the first electrode plate 51 is in an unfolded state, the two guiding portions 5111 are disposed at an interval along the extending direction W of the first electrode plate 51. A part of each guiding portion 5111 is located at the connecting portion 511a, and the other part is located at the intermediate transition portion 511b. In the embodiment, both two guiding portions 5111 are disposed on an inner surface of the bending section 511. An inner side of the intermediate transition portion 511b includes a part of an electrode active material layer 51b. In the embodiment, when the first electrode plate 51 is being bent, it can be easily bent at positions corresponding to the two guiding portions 5111, which thereby further improves a controllability and an accuracy of the bending position, and further ensures that first outer edges 5121 of the two adjacent first stacking sections 512 are aligned.

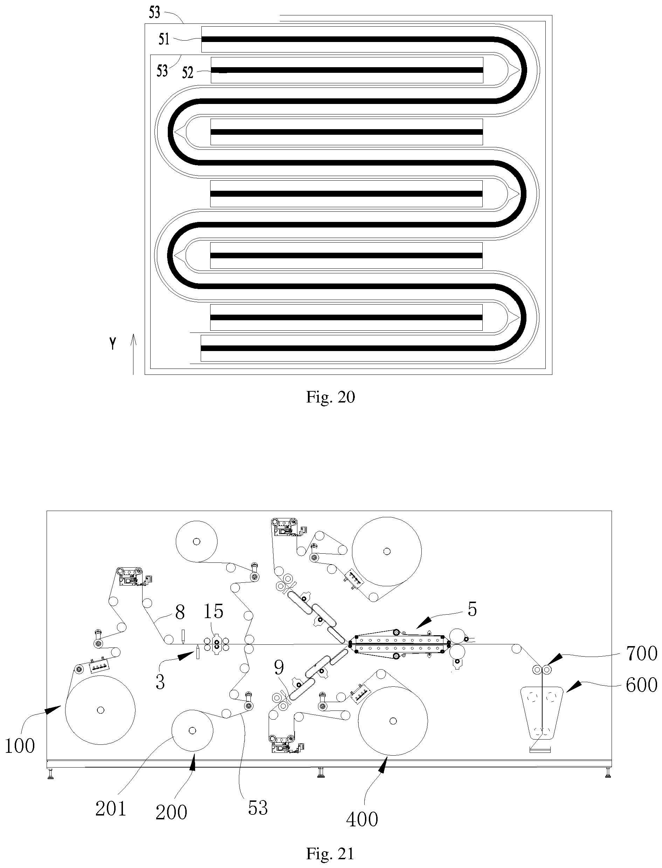

Fig. 20 schematically shows a side view structure of an electrode assembly 50 according to another embodiment of the disclosure. In the embodiment as shown in Fig. 20, the same structure as the embodiment as shown in Fig. 9 will not be repeated here, and the description here will mainly focus on differences from the embodiment as shown in Fig. 9. In the embodiment, the separator 53 extends beyond the first electrode plate 51, and a portion of the separator 53 that extends beyond the first electrode plate 51 wraps around the first electrode plate 51 and the second electrode plate 52, so that the separator 53 directly forms an insulation protection for the first electrode plate 51 and the second electrode plate 52, which reduces subsequent steps of insulating and packaging the first electrode plate 51 and the second electrode plate 52 that have been folded.

The electrode assembly 50 according to embodiments of the disclosure includes a first electrode plate 51, a second electrode plate 52 and a separator 53. The first electrode plate 51 includes a first stacking section 512 and a bending section 511 that are alternately disposed. The bending section 511 includes a guiding portion 5111. During the production process of the electrode assembly 50, it is required to sequentially dispose the separator 53 and the second electrode plate 52 on the first electrode plate 51, and then bend the first electrode plate 51 through multiple reciprocal folding, so that the first stacking section 512 and the second stacking section 521 of the second electrode plate 52 are stacked with respect to each other. The guiding portion 5111 of the bending section 511 can guide the first electrode plate 51 to bend at a predetermined position of the bending section 511 during the bending process of the first electrode plate 51, which thereby improves a controllability and an accuracy of the bending position of the first electrode plate 51, and then ensures first outer edges 5121 of the first stacking sections 512 to be aligned, so that one of the first stacking section 512 and the second stacking section 521 serving as a cathode electrode plate can cover the other of the first stacking section 512 and the second stacking section 521 serving as an anode electrode plate. In this way, the electrode assembly 50 according to embodiments of the disclosure has a low possibility that lithium plating phenomenon occurs between the first electrode plate 51 and the second electrode plate 52, and ensures that a secondary battery using the electrode assembly 50 has a good electrochemical performance and a good safety performance.

Embodiments of the disclosure also provide a forming method of an electrode assembly 50, which includes:
providing a first electrode plate 51, the first electrode plate 51 including a plurality of bending sections 511 and a plurality of first stacking sections 512, and each bending section 511 being configured to connect two adjacent first stacking sections 512, wherein the bending section 511 includes a guiding portion 5111;
providing a second electrode plate 52 with a polarity opposite to that of the first electrode plate 51, the second electrode plate 52 including a plurality of second stacking sections 521, and each second stacking section 521 being disposed between two adjacent first stacking sections 512;
bending the bending section 511 along the guiding portion 5111 so that first outer edges 5121 of the two adjacent first stacking sections 512 connected to the bending section 511 are aligned.

The forming method of the electrode assembly 50 according to embodiments of the disclosure can be configured to manufacture the electrode assembly 50 according to the above embodiments.

In an embodiment, the forming method further includes a step of forming the guiding portion 5111 through at least one of a metal cutter, a laser cutter, and a liquid etching tool. In an example, in this step, the electrode active material layer 51b at a predetermined position on the bending section 511 is removed by mechanical cutting, laser cutting, water erosion, or chemical reaction, etc., so as to form the guiding portion 5111 at the first electrode plate 51.

In one embodiment, prior to the step of providing the second electrode plate 52 with the polarity opposite to that of the first electrode plate 51, the first electrode plate 51 including the guiding portion 5111 is provided with separators 53 disposed in pairs, so that the separators 53 disposed in pairs are located on opposite sides of the first electrode plate 51.

In the forming method of the electrode assembly 50 according to the disclosure, during a production process of the electrode assembly 50, the first electrode plate 51 is bent along the guiding portion 5111 of the bending section 511. The guiding portion 5111 of the bending section 511 can guide the first electrode plate 51 to be bent at a predetermined position of the bending section 511 during the bending process of the first electrode plate 51, thereby improving controllability and accuracy of the bending position of the first electrode plate 51, so that the first outer edges 5121 of the two adjacent first stacking sections 512 connected to the bending section 511 can be aligned, and one of the first stacking section 512 and the second stacking section 521 serving as a cathode electrode plate can cover the other of the first stacking section 512 and the second stacking section 521 serving as an anode electrode plate. In this way, the electrode assembly 50 manufactured by the forming method of the electrode assembly 50 according to embodiments of the disclosure has a low possibility that lithium plating phenomenon occurs between the first electrode plate 51 and the second electrode plate 52, and ensures that a secondary battery using the electrode assembly 50 has a good electrochemical performance and a good safety performance.

In embodiments of the disclosure, the electrode assembly 50 may be a stacked cell formed by stacking and folding a first electrode plate 51, a separator 53, and a second electrode plate 52. The first electrode plate 51 includes a plurality of bending sections 511 and a plurality of first stacking sections 512, wherein the bending section 511 after being bent is at least partially in a bent state. The first electrode plate 51 has a continuously extending overall structure. Along an extending direction W of the first electrode plate 51, the bending sections 511 and the first stacking sections 512 are alternately disposed. The second electrode plate 52 includes a plurality of second stacking sections 521, and each second stacking section 521 is disposed between two adjacent first stacking sections 512. In the following embodiments, description is made by taking an example in which first electrode plate 51 is an anode electrode plate and the second electrode plate 52 is a cathode electrode plate. Similarly, in other embodiments, the first electrode plate 51 may be a cathode electrode plate, and the second electrode plate 52 may be an anode electrode plate. The guiding portion 5111 may be a trace formed in the first electrode plate 51.

In order to better understand the disclosure, a stacked cell manufacturing system and a stacked cell forming method according to embodiments of the disclosure will be described in detail below with reference to Figs. 21 to 32.

Embodiments of the disclosure provide a stacked cell manufacturing system, including:
a first conveying mechanism 100 for providing an anode electrode plate, wherein the anode electrode plate includes a plurality of bending sections 511 and a plurality of first stacking sections 512, and each bending section 511 is configured to connect two adjacent first stacking sections 512;
a trace making mechanism 300, wherein the trace making mechanism 300 is configured to provide traces in the bending section 511, and the traces are configured to guide the bending section 511 to bend during a production process;
a second conveying mechanism 400 for providing a cathode electrode plate with a polarity opposite to that of the anode electrode plate, wherein the cathode electrode plate includes a plurality of second stacking sections 521, and each second stacking section 521 is disposed between two adjacent first stacking sections 512;
a stacking mechanism 600 for bending the bending section 511 along the trace and stacking the two adjacent first stacking sections 512 connected to the bending section 511.

In one embodiment, please refer to Fig. 21, the stacked cell manufacturing system according to embodiments of the disclosure includes a first conveying mechanism 100, a separator conveying mechanism 200, a trace making mechanism 300, a second conveying mechanism 400, and a composite forming mechanism 500 and a stacking mechanism 600. The first conveying mechanism 100 is configured to provide an anode electrode plate. The separator conveying mechanism 200 is arranged downstream of the first conveying mechanism 100 and is configured to provide separators 53 disposed in pairs, and the separators 53 disposed in pairs are configured to clamp the anode electrode plate. The trace making mechanism 300 is arranged upstream of the separator conveying mechanism 200. In some optional examples, the trace making mechanism 300 may be located between the first conveying mechanism 100 and the separator conveying mechanism 200, and the trace making mechanism 300 is configured to provide traces in the anode electrode plate. The second conveying mechanism 400 is arranged downstream of the separator conveying mechanism 200 and is configured to provide a plurality of cathode electrode plates to the separator 53. The composite forming mechanism 500 is arranged downstream of the second conveying mechanism 400 and is configured to combine the anode electrode plate, the separator 53 and the cathode electrode plate to form an assembly to be stacked. The stacking mechanism 600 is arranged downstream of the composite forming mechanism 500, and the stacking mechanism 600 is configured to reciprocally fold and stack the assemblies to be folded and stacked along the traces to form a stacked cell.

It should be noted that the terms "upstream" and "downstream" as mentioned above and below in the disclosure refer to orders in a production sequence of the stacked cell, and is not intended to limit spatial positions of the respective components.

Moreover, the traces as mentioned above and below in the disclosure refer to marks or imprints left by things, such as a crease, and optionally, it may refer to a structure formed by a material-removed portion after a part of material is removed from the anode electrode plate through a material removing component.

The stacked cell manufacturing system according to embodiments of the disclosure can meet production requirements of the stacked cell, and also can reduce safety risks of the stacked cell.

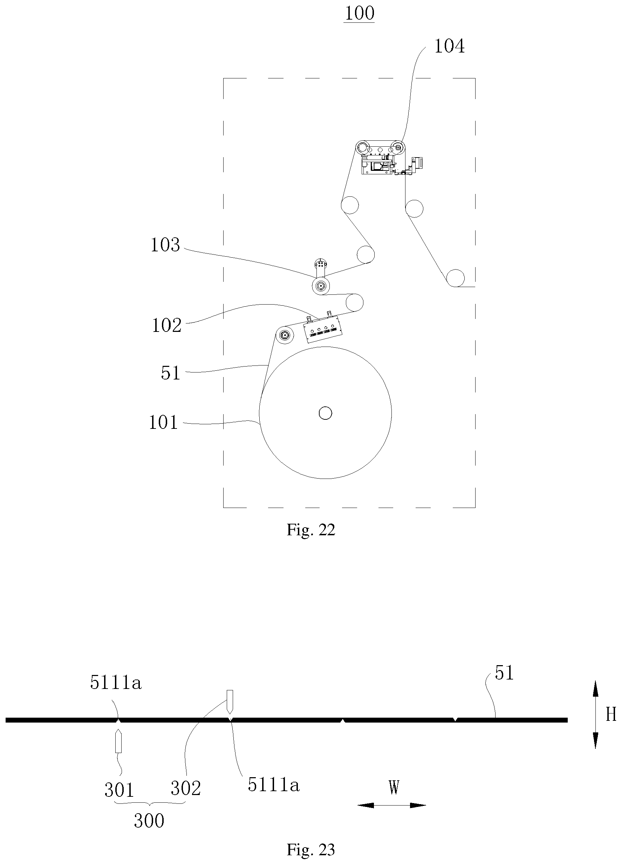

Please also refer to Fig. 22, optionally, the first conveying mechanism 100 may include a first roll-off device 101, a first tape splicing device 102, a first tension balancing device 103 and a first offset correcting device 104. The first offset correcting device 104 is arranged downstream of the first roll-off device 101, and both the first tape splicing device 102 and the first tension balancing device 103 are located between the first roll-off device 101 and the first offset correcting device 104.

The first roll-off device 101 may include a first roll-off roller and a driving component that drives the first roll-off roller to rotate, the anode electrode plate is wound around the first roll-off roller, and the first roll-off roller rotates to roll off the anode electrode plate.

Optionally, the first tape splicing device 102 can be arranged downstream of the first roll-off device 101, and can be used to perform tape splicing when the rolling off of the anode electrode plate has been finished to ensure a continuous production.

Optionally, the first offset correcting device 104 is located upstream of the trace making mechanism 300; it can be monitored, through a detection device, in real time or at a certain time interval whether the anode electrode plate is within a predetermined range of the trace making mechanism 300; if not, it is required to adjust the position of the anode electrode plate to ensure that the anode electrode plate is always within a trace making range of the trace making mechanism 300.

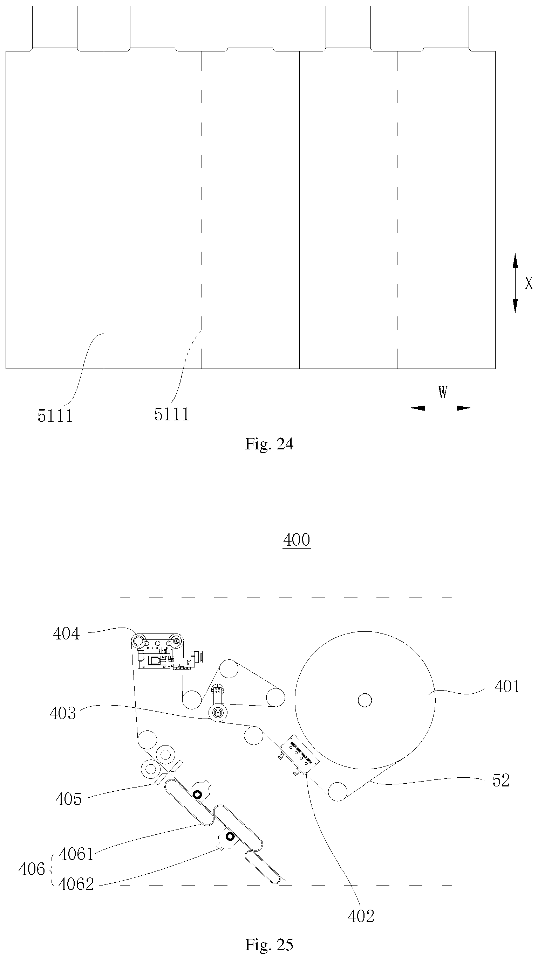

Optionally, the first tension balancing device 103 may be located downstream of the first tape splicing device 102; when the first roll-off device 101 and a driving motor for providing a moving power for the anode electrode plate are not synchronized, the first tension balancing device 103 may be used to adjust it to maintain a tension of the anode electrode plate within a certain range. Please refer to Fig. 23 and Fig. 25, in some optional embodiments, the trace making mechanism 300 includes a first trace making component 301 and a second trace making component 302 arranged at an interval, and in a thickness direction H of the anode electrode plate, the trace making component 301 is configured to provide traces on one surface of the anode electrode plate, and the second trace making component 302 is configured to provide traces on the other surface of the anode electrode plate. Through the above arrangement, the trace making mechanism 300 in operation can alternately provide traces on the two surfaces of the anode electrode plate in the thickness direction H, so that the anode electrode plate can be easily folded along the traces on the two surfaces of the anode electrode plate during a final stacking process. A direction of the trace is consistent with that of a final crease, which facilitates enabling the stacking mechanism 600 to reciprocally fold and stack the assemblies to be stacked along the traces. As an optional embodiment, the first trace making component 301 is one of a metal cutter, a laser cutter, and a liquid etching tool, the first trace making component 301 in the above form can remove material at a predetermined position by mechanical cutting, laser cutting, water erosion, or chemical reaction, etc., to form a trace on one surface of the anode electrode plate in the thickness direction H. The operation process is simple, and facilitates an easy formation of traces.

In some optional examples, similarly, the second trace making component 302 of the stacked cell manufacturing system according to the above embodiments is one of a metal cutter, a laser cutter, and a liquid etching tool. The second trace making component 302 can remove material at a predetermined position by mechanical cutting, laser cutting, water erosion, or chemical reaction, etc., to form a trace on the other surface of the anode electrode plate in the thickness direction H. The operation process is simple, and facilitates an easy formation of traces.

As an optional embodiment, a first dust removing device 105 is disposed downstream of the trace making mechanism 300. The first dust removing device 105 is located between the trace making mechanism 300 and the separator conveying mechanism 200. The first dust removing device 105 is configured to remove dust from a front side and/or a back side of the anode electrode plate to clean the anode electrode plate. The first dust removing device 105 may include a bristle brush and a dust suction component. When the anode electrode plate is moving, the dust can be peeled off by the bristle brush, and the dust peeled off from the anode electrode plate can be sucked and collected by the dust suction component to ensure a cleanliness of the anode electrode plate when it is clamped by the separator 53 and thereby further optimize an electrical performance of the stacked cell formed by folding and stacking.

In some optional embodiments, the separator conveying mechanism 200 may be further located downstream of the second trace making component 302 of the trace making mechanism 300, the separator conveying mechanism 200 includes separator conveying devices disposed in pairs, and two separator conveying devices in a pair can be disposed opposite to each other. Each separator conveying device includes a separator roll-off roller 21 and a driving component that drives the separator roll-off roller to rotate, the separator 53 is wound around the separator roll-off roller, and the separator roll-off roller rotates to roll off the separator 53, and a guiding wheel may guide the corresponding separator 53 to a predetermined position to clamp the anode electrode plate with traces.

Please also refer to Fig. 25, in some optional embodiments, the second conveying mechanism 400 may include a second roll-off device 401, a second tape splicing device 402, a second tension balancing device 403, a second offset correcting device 404, a cutting device 405 and a second dust removing device 406.

Optionally, the second roll-off device 401 may include a second roll-off roller and a driving component that drives the second roll-off roller to rotate, the cathode electrode plate is wound around the second roll-off roller, and the second roll-off roller rotates to roll off the cathode electrode plate.

Optionally, the second tape splicing device 402 can be arranged downstream of the second roll-off device 401, and can be used to perform tape splicing when the rolling off of the cathode electrode plate has been finished to ensure a continuous production.

Optionally, the second tension balancing device 403 is located downstream of the second tape splicing device 402; when the second roll-off device 401 and a driving motor for providing a moving power for the cathode electrode plate are not synchronized, the second tension balancing device can be used 403 may be used to adjust it to maintain a tension of the cathode electrode plate within a certain range. Optionally, the second offset correcting device 404 is located downstream of the second tension balancing device 403; it can be monitored, through a detection device, in real time or at a certain time interval whether the cathode electrode plate is within a predetermined range of the second offset correcting device 404; if not, it is required to adjust the position of the cathode electrode plate to ensure that the cathode electrode plate is always within a cutting range of the cutting mechanism 45. Optionally, the cutting device 405 is disposed downstream of the second offset correcting device 404, and is configured to cut the tape-shaped cathode electrode plate into a plurality of block-shaped structures with a predetermined size.

Optionally, a second dust removing device 406 is located downstream of the cutting device 405, and is configured to receive the block-shaped cathode electrode plate and remove dust from the cathode electrode plate, so as to ensure a cleanliness of the cathode electrode plate connected to the separator 53. The second dust removing device 406 may include a belt brush 4061 and a dust suction device 4062; the cathode electrode plate cut by the cutting device 405 falls to the belt brush 4061 of the second dust removing device 406, and the cathode electrode plate can be transported through the belt brush 4061 in a direction towards the composite forming mechanism 500 and connected to the separator 53. In the transportation process, the dust on the cathode electrode plate can also be peeled off by the belt brush 4061 and sucked and collected by the dust suction device 4062, so as to ensure a cleanliness of the cathode electrode plate connected to the separator 53 and thereby enable the produced stacked cell to better meet its electrical requirements.

In specific implementations, the second conveying mechanisms 400 may be disposed in pairs according to requirements, and the second conveying mechanisms 400 disposed in pairs may be opposite to each other, and may synchronously or alternately provide cathode electrode plates to a same separator 53 or different separators 53.

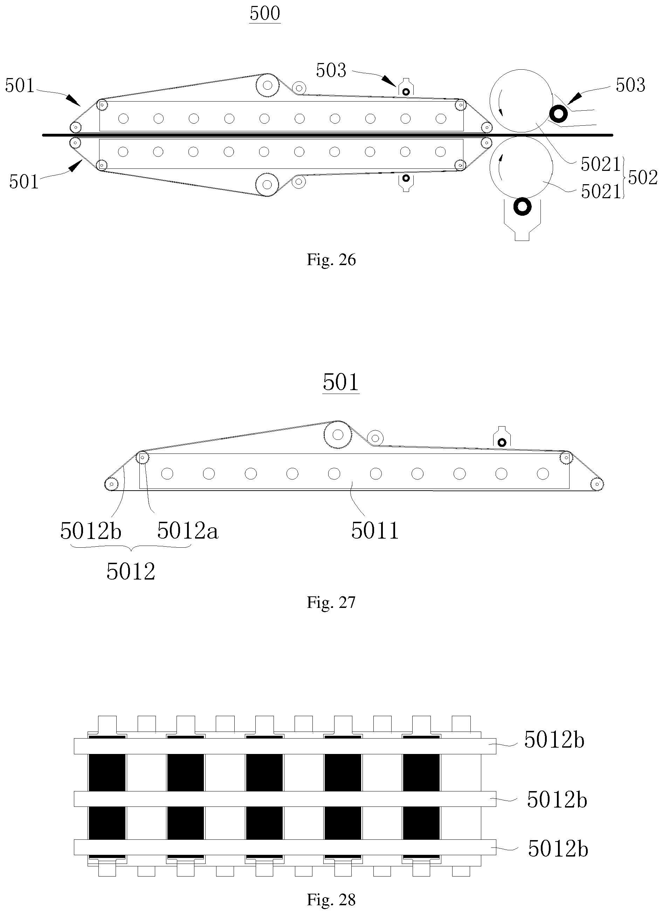

Please refer to Figs. 26-28, optionally, the composite forming mechanism 500 of the stacked cell manufacturing system according to the above embodiments may include a heating conveying assembly 501 and a roller pressing component 502; the heating conveying assembly 501 is configured to heat and convey the separator 53 and the cathode electrode plate; and the roller pressing component 502 is disposed downstream of the heating conveying assembly 501 and is configured to roll the separator 53 and the cathode electrode plate after being heated, which then are compositely connected. The composite forming mechanism 500 adopts the above structure form, has a simple structure, and can ensure a composite effect of the cathode electrode plate and the separator 53 that clamps the anode electrode plate.

As an optional embodiment, the heating conveying assembly 501 includes a heating component 5011 and a conveying component 5012. The heating component 5011 is configured to heat the separator 53 and the cathode electrode plate. The conveying component 5012 includes a transmission wheel 5012a and a transmission belt 5012b cooperating with the transmission wheel 5012a, and the transmission belt 5012b is disposed around the heating component 5011 and is configured to convey the separator 53 and the cathode electrode plate.

Since the cathode electrode plate is applied with a PVDF adhesive and the corresponding separator 53 is also applied with a PVDF adhesive, both adhesives after being heated and pressed can be better bonded together.

Therefore, the heating conveying assembly 501 adopts the above structures, which can meet heating and bonding requirements, and also the conveying component 5012 is restricted to include a transmission wheel 5012a and a transmission belt 5012b that cooperates with the transmission wheel 5012a; by restricting a relationship between the transmission belt 5012b and the heating component 5011, on the basis that heating requirements are met, the cathode electrode plate on the surface of the separator 53 can be protected and transported by the transmission belt 5012b, so that the cathode electrode plate can move synchronously with the separator 53, to ensure a stable relative position of the cathode electrode plate and the separator 53, thereby ensuring composite requirements between the cathode electrode plate and the separator 53.

Moreover, in the stacked cell manufacturing system according to embodiments of the disclosure, the heating conveying assembly 501 adopts the above structural forms, so that after the cathode electrode plate has been sufficiently heated by the heating component 5011, the cathode electrode plate and the separator 53 are connected together through the roller pressing component 502 to achieve a preparation of the assembly to be stacked. Compared with a traditional composite forming mechanism, the heating conveying assembly 501 adopts the transmission belt to replace a disposable PET film; and by cancelling the PET film, it can save time taken to unwind and wind the PET film, and can increase a utilization rate of equipment and reduce a manufacturing cost.

In some optional embodiments, the heating component 5011 may adopt components capable of providing thermal energy such as an oven, a heat exchanger, etc., to at least complete heating of the cathode electrode plate and the separator 53.

In some optional embodiments, when the heating component 5011 adopts an oven structure, the oven can be made of a metal plate and include multiple heating tubes evenly disposed within the oven; heat from the heating tubes can bring a heating oven to a setting temperature; when the cathode electrode plate passes through the oven, the temperature of the oven makes the cathode electrode plate and the separator 53 reach a certain temperature by heat radiation.

Optionally, the transmission belt 5012b can be a belt, the number of which can be arranged according to a size of the cathode electrode plate; in some optional embodiments, the number of the transmission belts 5012b can be two or more, and the two or more transmission belts 5012b are disposed at intervals and can jointly convey the cathode electrode plate and the separator 53, to ensure a stability of a force applied to the cathode electrode plate, thereby ensuring that the cathode electrode plate can smoothly move in synchronization with the separator 53.

As an optional embodiment, the number of heating conveying assemblies 501 is two or more, every two heating conveying assemblies 501 form a group and are disposed opposite to each other, and the two heating conveying assemblies 501 in a same group jointly clamp and convey the cathode electrode plate and the separator 53 through oppositely disposed transmission belts 5012b.

By disposing the heating conveying assemblies 501 in pairs and enabling the heating conveying assemblies 501 disposed in pairs to jointly clamp and act on the cathode electrode plate and the separator 53, it can be ensured that the cathode electrode plates on two separators 53 can move in synchronization with respective corresponding separators 53, which can better ensure a stability of a relative position of each cathode electrode plate and each separator 53 so as to ensure an accuracy of a position of the cathode electrode plate on the separator 53 before the roller pressing component 502.

As an optional embodiment, the roller pressing component 502 may include squeezing rollers 5021 disposed in pairs, and the cathode electrode plate and the separator 53 after being heated can be squeezed by the squeezing rollers 5021 disposed in pairs, so that the cathode electrode plate and the separator 53 are compositely connected and form an assembly to be stacked with the anode electrode plate.

As an optional embodiment, the roller pressing component 502 and/or the transmission belt 5012b is provided with a dust removing component 503, i.e., at least one of the roller pressing component 502 and the transmission belt 5012b is provided with a dust removing component 503, and the dust removing component 503 can also adopt a cooperation of a bristle brush and a dust suction device to remove dust from the assembly to be stacked to better ensure a performance of the stacked cell.

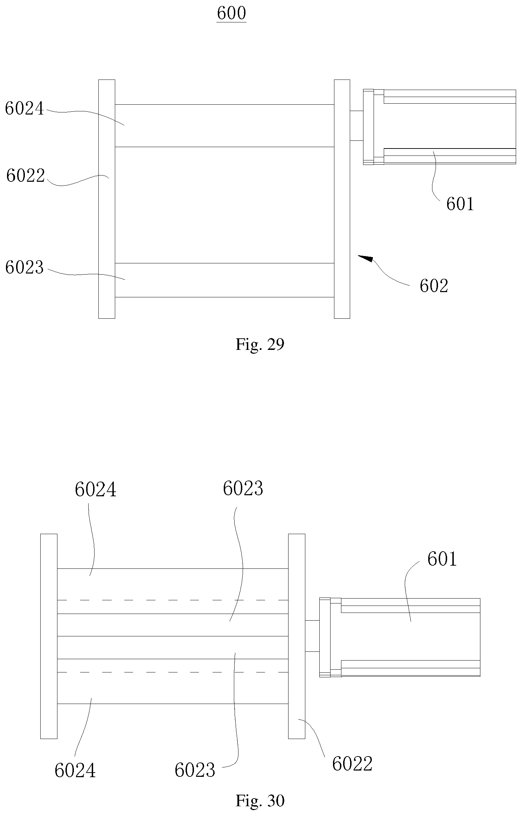

Please refer to Figs. 29 to 31, in some optional embodiments, in the stacked cell manufacturing system according to the above embodiments, the stacking mechanism 600 may include a power source 601 and a swing mechanism 602; the swing mechanism 602 includes a gap 6021 through which the assembly to be stacked can pass; and the power source 601 is connected to the swing mechanism 602 and drives the swing mechanism 602 to swing back and forth along a predetermined trajectory to reciprocally fold and stack the assembly to be stacked to form a stacked cell. The stacking mechanism 600 adopts the above structural form, has a simple structure and a low cost, and can reciprocally fold the assembly to be stacked according to the traces on the anode electrode plate, so that the formed stacked cell has a better performance.

As an optional embodiment, the swing mechanism 602 includes a mounting base 6022 and clamping rollers 6023 disposed in pairs and connected to the mounting base 6022, the gap 6021 is formed between the clamping rollers 6023 disposed in pairs, and the swing mechanism 602 is connected to the power source 601 through the mounting base 6022. The swing mechanism 602 adopts the above structural form, which allows it to be easily connected to the power source 601 to better meet power transmission requirements, and also to meet passing through requirements of the assembly to be stacked, so that the assembly to be stacked can be folded back and forth along the predetermined traces to ensure packing requirements of the stacked cell.

Optionally, the power source 601 may adopt a driving motor, the mounting base 6022 may include mounting plates disposed in pairs and at intervals, the clamping roller 6023 is located between two mounting plates and axial ends of the clamping roller 6023 are respectively connected to the corresponding mounting plates.

In some optional embodiments, the swing mechanism 602 further includes limiting reinforcement rollers 6024 disposed in pairs, and the limiting reinforcement roller 6024 is located upstream of the clamping roller 6023 and connected to the mounting base 6022. By providing the limiting reinforcement roller 6024, a tilt angle of the assembly to be stacked can be limited when the swing mechanism 602 is moving, which better ensures that the assembly to be stacked can be folded back and forth along the corresponding traces, thereby ensuring a stacking accuracy.

Moreover, by providing the limiting reinforcement roller 6024, it can also strengthen the mounting base 6022, can avoid changes in a relative position of the mounting base 6022 and the clamping roller 6023 or a relative position of the clamping rollers 6023 disposed in pairs due to the swinging of the swing mechanism 602 along the predetermined trajectory, and can also better ensure the stacking requirements of the stacked cell.

In some optional embodiments, the stacked cell manufacturing system according to the above embodiments further includes a main conveying mechanism 700, the main conveying mechanism 700 is located between the composite forming mechanism 500 and the stacking mechanism 600, and the main conveying mechanism 700 is configured to provide a moving power to the assembly to be stacked to better ensure that the assembly to be stacked moves toward the stacking mechanism 600 at a predetermined speed. The driving motor configured to provide power to the anode electrode plate described in the above embodiments may be the main conveying mechanism 700.

Therefore, the stacked cell manufacturing system according to embodiments of the disclosure includes a first conveying mechanism 100, a separator conveying mechanism 200, a trace making mechanism 300, a second conveying mechanism 400, a composite forming mechanism 500, and a stacking mechanism 600; and by providing the trace making mechanism 300 and enabling it to make the traces on the anode electrode plate, a step of cutting the anode electrode plate can be omitted, which avoids burr generation, ensures safety of the stacked cell, and also simplifies a structure of the stacked cell manufacturing system.

In one embodiment, please refer to Figs. 21 to 32, embodiments of the disclosure also provide a forming method of a stacked cell, including:
S100: providing an anode electrode plate, and making multiple traces on the anode electrode plate, wherein the multiple traces are distributed at intervals in an extending direction W of the anode electrode plate;
S200: providing separators 53 disposed in pairs to the anode electrode plate with the traces, and enabling the separators 53 disposed in pairs to jointly clamp the anode electrode plate;
S300: providing multiple cathode electrode plates to the separator 53, so that the multiple cathode electrode plates are applied at intervals along the extending direction W and connected to a surface of the separator 53 away from the anode electrode plate to form an assembly to be stacked, wherein each cathode electrode plate is located between two adjacent traces;
S400, reciprocally folding and stacking the assembly to be stacked along positions of the multiple traces to form a stacked cell.

In some optional examples, the forming method of the stacked cell according to the embodiments of the disclosure may be implemented through the stacked cell manufacturing system discussed in the above embodiments.

In step S100, the provided anode electrode plate has a continuous tape-like structure, and the trace is a structure formed by a material-removed portion after a part of material is removed from the anode electrode plate by a material removing component, wherein the material removing component is one of a metal cutter, a laser cutter, and a liquid etching tool, i.e., the material removing component may be the trace making mechanism 300 described in the above embodiments.

In some optional examples, the part of the material removed by the material removing component from the anode electrode plate may be an electrode active material, and then a depth of the trace is less than or equal to a thickness of the electrode active material layer 51b. The part of the material removed by the material removing component from the anode electrode plate may also be the electrode active material and a material of the current collector 51a, and then the depth of the trace is greater than the thickness of the electrode active material layer 51b.

In some optional examples, in step S 100, one trace of the two adjacent traces is located on one surface of the anode electrode plate in its thickness direction H, and the other trace is located on the other surface of the anode electrode plate in the thickness direction H.

When the forming method of the disclosure is implemented through the stacked cell manufacturing system according to any of the above embodiments, in step S100, the anode electrode plate may be provided by the first conveying mechanism 100, and the corresponding traces may be made on the anode electrode plate by the trace making mechanism 300. In step S200, the separators 53 disposed in pairs may be provided by the separator transport mechanism 200.

In some optional embodiments, in step S300, one of two adjacent cathode electrode plates is connected to one of the separators 53 disposed in pairs, and the other is connected to the other of the separators 53 disposed in pairs. Through the above arrangement, the formed stacked cell can better meet use requirements and optimize an electrical performance of the stacked cell.

In some optional examples, the cathode electrode plate may be provided by the second conveying mechanism 400 in the stacked cell manufacturing system according to any of the above embodiments.

In step S400, the stacking mechanism 600 in the stacked cell manufacturing system according to any of the above embodiments may fold and stack the assembly to be stacked to meet production requirements of the stacked cell.

The forming method of the stacked cell according to the embodiments of the disclosure can meet the production requirements of the stacked cell, and can also reduce safety risks of the stacked cell.

It should be noted that, in the stacked cell manufacturing system and the forming method of the stacked cell according to the above embodiments of the disclosure, in the thickness direction H of the anode electrode plate, a thickness of an area of the anode electrode plat where the trace is formed is less than a thickness of other area of the anode electrode plate where no trace is formed. Making the traces can ensure that it is easier for the anode electrode plate to be folded at the area where the trace is formed as compared to the other areas.

Optionally, the trace may be the groove 5111a according to the above embodiments which is formed after a material is removed from the anode electrode plate. Optionally, the shape of the groove 5111a may be a U-shaped groove, a triangular groove, or other regular-shaped polygonal grooves or irregularly shaped special-shaped grooves. Optionally, the trace passes through the anode electrode plate in a tape width direction of the anode electrode plate. The tape width direction of the anode electrode plate is the same as the first direction X, and the tape width direction is perpendicular to the extending direction W and the thickness direction H.

Optionally, the number of grooves 5111a is two or more. Along the first direction X, two or more grooves 5111a are disposed at intervals. Alternatively, the number of grooves 5111a may be one.

Optionally, the trace may be the through hole 5111b according to the above embodiments which is formed after a material is removed from the anode electrode plate. When the first electrode plate 51 is in an unfolded state, along the thickness direction H of the first electrode plate 51, the through hole 5111b passes through the two electrode active material layers 51b and the current collector 51a. In an example, a shape of the through hole 5111b may be a rectangle shape, a square shape, an ellipse shape, a trapezoid shape, or a triangle shape. The number of the through holes 5111b is two or more, and along the first direction X, the two or more through holes 5111b are disposed at intervals. In one embodiment, the number of through holes 5111b may be one.

Optionally, the traces may be the groove 5111a and the through hole 5111b according to the above embodiments which are formed after the material is removed from the anode electrode plate. Optionally, the number of the through holes 5111b is two or more, and along the first direction X, one or two or more grooves 5111a may be disposed between two adjacent through holes 5111b. Alternatively, the number of grooves 5111a is two or more, and one or more through holes 5111b may be disposed between two adjacent grooves 5111a.

Although the disclosure has been described with reference to the preferred embodiments, various modifications may be made to the disclosure and components may be replaced with equivalents without departing from the scope of the disclosure; and in particular, the technical features mentioned in the various embodiments can be combined in any manner as long as there is no structural conflict. The disclosure is not limited to the specific embodiments disclosed herein, but includes all technical solutions falling within the scope of the claims.

## Claims

1. An electrode assembly (50) for a secondary battery (30), wherein the electrode assembly (50) comprises:
a first electrode plate (51) comprising a plurality of bending sections (511) and a plurality of stacked first stacking sections (512) reciprocally folded to form a zigzag shape, each of the bending sections (511) being configured to connect two adjacent first stacking sections (512), wherein the bending section (511) comprises a guiding portion (5111) for guiding the bending section (511) to be bent during production; and
a second electrode plate (52) with a polarity opposite to that of the first electrode plate (51), wherein the second electrode plate (52) comprises a plurality of second stacking sections (521), and each of the second stacking sections (521) is disposed between two adjacent first stacking sections (512), wherein
the guiding portion (5111) comprises at least two grooves (5111a), in two adjacent bending sections, one groove (5111a) disposed in one bending section (511) is located at one side of a current collector (51a) comprised in the first electrode sheet (51), and the other groove (5111a) disposed in the other bending section (511) is located at the other side of the current collector (51a) so that so that all the grooves are only on the inner side of the respective bending sections after the folding of the electrode plate,
the guiding portion (5111) is disposed along a first direction (X), and the first direction (X) is perpendicular to a bending direction (Z) of the bending section (511), and
one groove in the same bending section is subdivided into two sub-grooves at intervals of the first electrode plate along the bending direction (Z).

2. The electrode assembly (50) according to claim 1, wherein each of the first stacking sections (512) comprises two opposite first outer edges (5121), and after the bending section (511) has been guided to be bent during production, first outer edges (5121) of two adjacent first stacking sections (512) connected to the bending section (511) are aligned.

3. The electrode assembly (50) according to claim 1, **characterized in that** a ratio of a length of the guiding portion (5111) in the first direction (X) to a length of the bending section (511) in the first direction (X) is 0.4 to 0.8.

4. The electrode assembly (50) according to any one of claims 1 to 3, **characterized in that** the guiding portion (5111) comprises at least one through hole (5111b).

5. The electrode assembly (50) according to any one of claims 1 to 4, **characterized in that** a projection of the guiding portion (5111) on a plane perpendicular to the first direction (X) has a triangle shape, a trapezoid shape, a U-shape, a rectangular shape or a V-shape.

6. The electrode assembly (50) according to any one of claims 1 to 5, wherein the first electrode plate (51) is an anode electrode plate, and the second electrode plate (52) is a cathode electrode plate.

7. A secondary battery (30), wherein the secondary battery (30) comprises an electrode assembly (50) according to any one of claims 1 to 6.

8. A battery module (20), wherein the battery module (20) comprises a secondary battery (30) according to claim 7.

9. A device, wherein the device comprises a secondary battery (30) according to claim 7, and the secondary battery (30) is configured to provide electrical energy.

10. A forming method of an electrode assembly (50) for a secondary battery (30), wherein the forming method comprises following steps performed sequentially:
providing a first electrode plate (51), which comprises a plurality of bending sections (511) and a plurality of first stacking sections (512) reciprocally folded to form a zigzag shape, each bending section (511) being configured to connect two adjacent first stacking sections (512), wherein the bending section (511) comprises a guiding portion (5111);
providing a second electrode plate (52) with a polarity opposite to that of the first electrode plate (51), wherein the second electrode plate (52) comprises a plurality of second stacking sections (521), and each of the second stacking sections (521) is disposed between two adjacent first stacking sections (512); and
bending the bending section (511) along the guiding portion (5111) so that the two adjacent first stacking sections (512) connected to the bending section (511) are stacked, wherein
the guiding portion (5111) comprises at least two grooves (5111a), in two adjacent bending sections, one groove (5111a) disposed in one bending section (511) is located at one side of a current collector (51a) comprised in the first electrode sheet (51), and the other groove (5111a) disposed in the other bending section (511) is located at the other side of the current collector (51a) so that so that all the grooves are only on the inner side of the respective bending sections after the folding of the electrode plate,
wherein the guiding portion (5111) is disposed along a first direction (X), and the first direction (X) is perpendicular to a bending direction (Z) of the bending section (511), and
one groove in the same bending section is subdivided into two sub-grooves at intervals of the first electrode plate along the bending direction (Z).

11. The forming method according to claim 10, **characterized in that** the forming method further comprises a step of forming the guiding portion (5111) through at least one of a metal cutter, a laser cutter, and a liquid etching tool.

12. The forming method according to claim 10, wherein in the step of bending the bending section (511) along the guiding portion (5111) so that the two adjacent first stacking sections (512) connected to the bending section (511) are stacked, each of the first stacking sections (512) comprises two opposite first outer edges (5121), and the bending section (511) is bent along the guiding portion (5111) so that first outer edges (5121) of two adjacent first stacking sections (512) connected to the bending section (511) are aligned.

## Patentansprüche

1. Eine Elektrodenanordnung (50) für eine Sekundärbatterie (30), wobei die Elektrodenanordnung (50) Folgendes umfasst:
eine erste Elektrodenplatte (51), die mehrere Biegeabschnitte (511) und mehrere gestapelte erste Stapelabschnitte (512) umfasst, die hin- und hergefaltet sind, um eine Zickzackform zu bilden, wobei jeder der Biegeabschnitte (511) so konfiguriert ist, dass er zwei benachbarte erste Stapelabschnitte (512) verbindet, wobei der Biegeabschnitt (511) einen Führungsabschnitt (5111) zum Führen des zu biegenden Biegeabschnitts (511) während der Produktion umfasst; und
eine zweite Elektrodenplatte (52) mit einer Polarität, die derjenigen der ersten Elektrodenplatte (51) entgegengesetzt ist, wobei die zweite Elektrodenplatte (52) mehrere zweite Stapelabschnitte (521) umfasst und jeder der zweiten Stapelabschnitte (521 ) zwischen zwei benachbarten ersten Stapelabschnitten (512) angeordnet ist, wobei
der Führungsabschnitt (5111) mindestens zwei Nuten (5111a) umfasst, wobei sich in zwei benachbarten Biegeabschnitten eine Nut (5111a), die in einem Biegeabschnitt (511) angeordnet ist, auf einer Seite eines Stromkollektors (51a), der in der ersten Elektrodenplatte (51) enthalten ist, befindet, und die andere Nut (5111a), die im anderen Biegeabschnitt (511) angeordnet ist, sich auf der anderen Seite des Stromkollektors (51a) befindet, so dass sich alle Nuten nach dem Falten der Elektrodenplatte nur auf der Innenseite der jeweiligen Biegeabschnitte befinden,
der Führungsabschnitt (5111) entlang einer ersten Richtung (X) angeordnet ist und die erste Richtung (X) senkrecht zu einer Biegerichtung (Z) des Biegeabschnitts (511) ist, und
eine Nut im gleichen Biegeabschnitt in Abständen der ersten Elektrodenplatte entlang der Biegerichtung (Z) in zwei Teilnuten unterteilt.

2. Elektrodenanordnung (50) nach Anspruch 1, wobei jeder der ersten Stapelabschnitte (512) zwei gegenüberliegende erste Außenkanten (5121) umfasst, und nachdem der Biegeabschnitt (511) bei der Herstellung zum Biegen geführt wurde, erste Außenkanten (5121) zweier benachbarter erster Stapelabschnitte (512), die mit dem Biegeabschnitt (511) verbunden sind, ausgerichtet sind.

3. Elektrodenanordnung (50) nach Anspruch 1, **dadurch gekennzeichnet, dass** ein Verhältnis einer Länge des Führungsabschnitts (5111) in der ersten Richtung (X) zu einer Länge des Biegeabschnitts (511) in der ersten Richtung (X) 0,4 bis 0,8 beträgt.

4. Elektrodenanordnung (50) nach einem der Ansprüche 1 bis 3, **dadurch gekennzeichnet, dass** der Führungsabschnitt (5111) mindestens ein Durchgangsloch (5111b) umfasst.

5. Die Elektrodenanordnung (50) nach einem der Ansprüche 1 bis 4, **dadurch gekennzeichnet, dass** eine Projektion des Führungsabschnitts (5111) auf eine Ebene senkrecht zur ersten Richtung (X) eine Dreiecksform, eine Trapezform, eine U-Form, eine Rechteckform oder eine V-Form aufweist.

6. Elektrodenanordnung (50) nach einem der Ansprüche 1 bis 5, wobei die erste Elektrodenplatte (51) eine Anodenelektrodenplatte und die zweite Elektrodenplatte (52) eine Kathodenelektrodenplatte ist.

7. Sekundärbatterie (30), wobei die Sekundärbatterie (30) eine Elektrodenanordnung (50) nach einem der Ansprüche 1 bis 6 umfasst.

8. Batteriemodul (20), wobei das Batteriemodul (20) eine Sekundärbatterie (30) nach Anspruch 7 umfasst.

9. Vorrichtung, wobei die Vorrichtung eine Sekundärbatterie (30) nach Anspruch 7 umfasst und die Sekundärbatterie (30) zur Bereitstellung elektrischer Energie konfiguriert ist.

10. Ein Formverfahren einer Elektrodenanordnung (50) für eine Sekundärbatterie (30), wobei das Formverfahren die folgenden Schritte umfasst, die nacheinander durchgeführt werden:
Bereitstellen einer ersten Elektrodenplatte (51), die mehrere Biegeabschnitte (511) und mehrere erste Stapelabschnitte (512) umfasst, die hin- und hergefaltet sind, um eine Zickzackform zu bilden, wobei jeder Biegeabschnitt (511) so konfiguriert ist, dass er zwei benachbarte erste Stapelabschnitte (512) verbindet, wobei der Biegeabschnitt (511) einen Führungsabschnitt (5111) umfasst;
Bereitstellen einer zweiten Elektrodenplatte (52) mit einer Polarität, die derjenigen der ersten Elektrodenplatte (51) entgegengesetzt ist, wobei die zweite Elektrodenplatte (52) mehrere zweite Stapelabschnitte (521) umfasst und jeder der zweiten Stapelabschnitte (521 ) zwischen zwei benachbarten ersten Stapelabschnitten (512) angeordnet ist; und
Biegen des Biegeabschnitts (511) entlang des Führungsabschnitts (5111), so dass die beiden benachbarten ersten Stapelabschnitte (512), die mit dem Biegeabschnitt (511) verbunden sind, gestapelt werden, wobei
der Führungsabschnitt (5111) mindestens zwei Nuten (5111a) umfasst, wobei sich in zwei benachbarten Biegeabschnitten eine Nut (5111a), die in einem Biegeabschnitt (511) angeordnet ist, auf einer Seite eines Stromkollektors (51a), der in der ersten Elektrodenplatte (51) enthalten ist, befindet, und die andere Nut (5111a), die im anderen Biegeabschnitt (511) angeordnet ist, sich auf der anderen Seite des Stromkollektors (51a) befindet, so dass sich alle Nuten nach dem Falten der Elektrodenplatte nur auf der Innenseite der jeweiligen Biegeabschnitte befinden,
wobei der Führungsabschnitt (5111) entlang einer ersten Richtung (X) angeordnet ist und die erste Richtung (X) senkrecht zu einer Biegerichtung (Z) des Biegeabschnitts (511) ist, und
eine Nut im gleichen Biegeabschnitt in Abständen der ersten Elektrodenplatte entlang der Biegerichtung (Z) in zwei Teilnuten unterteilt.

11. Formverfahren nach Anspruch 10, **dadurch gekennzeichnet, dass** das Formverfahren weiterhin einen Schritt des Formens des Führungsabschnitts (5111) durch zumindest einen Metallschneider, einen Laserschneider und ein Flüssigkeitsätzwerkzeug umfasst.

12. Formverfahren nach Anspruch 10, wobei im Schritt des Biegens des Biegeabschnitts (511) entlang des Führungsabschnitts (5111) die beiden benachbarten ersten Stapelabschnitte (512), die mit dem Biegeabschnitt (511) verbunden sind, gestapelt werden, jeder der ersten Stapelabschnitte (512) zwei gegenüberliegende erste Außenkanten (5121) umfasst, und der Biegeabschnitt (511) entlang des Führungsabschnitts (5111) gebogen wird, so dass erste Außenkanten (5121) zweier benachbarter erster Stapelabschnitte (512), die mit dem Biegeabschnitt (511) verbunden sind, ausgerichtet sind.

## Revendications

1. Composant d'électrode (50) pour une batterie secondaire (30), dans lequel :
le composant d'électrode (50) comprend :
une première plaque d'électrode (51) comprenant une pluralité de segments de flexion (511) et une pluralité de premiers segments d'empilement (512) qui sont pliées réciproquement pour former une forme en zigzag, chacun des segments de flexion (511) étant configurée pour relier deux premiers segments d'empilement (512) adjacents, dans lequel le segment de flexion (511) comprend une portion de guidage (5111) pour guider le segment de flexion (511) à être courbé pendant la production ; et
une seconde plaque d'électrode (52) ayant une polarité opposée à celle de la première plaque d'électrode (51), dans lequel la seconde plaque d'électrode (52) comprend une pluralité de seconds segments d'empilement (521), et chacun des seconds segments d'empilement (521) est disposé entre deux premiers segments d'empilement (512) adjacents, dans lequel,
la portion de guidage (5111) comprend au moins deux rainures (5111a), dans deux segments de flexion adjacents, une rainure (5111a) disposée dans un segment de flexion (511) est située sur un côté d'un collecteur de courant (51a) comprise dans la première plaque d'électrode (51), et l'autre rainure (5111a) disposée dans l'autre segment de flexion (511) est située sur l'autre côté du collecteur de courant (51a) de sorte que toutes les rainures ne soient que sur le côté intérieur des segments de flexion respectives après le pliage de la plaque d'électrode,
la portion de guidage (5111) est disposée dans une première direction (X), la première direction (X) étant perpendiculaire à une direction de flexion (Z) du segment de flexion (511), et
une rainure dans le même segment de flexion est subdivisée en deux sous-rainures à intervalles de la première plaque d'électrode dans la direction de flexion (Z).

2. Composant d'électrode (50) selon la revendication 1, dans lequel chacun des premiers segments d'empilement (512) comprend deux premiers bords extérieurs opposés (5121), et une fois le segment de flexion (511) guidé pour être courbé pendant la production, les premiers bords extérieurs (5121) des deux premiers segments d'empilement (512) adjacents reliés au segment de flexion (511) sont alignés.

3. Composant d'électrode (50) selon la revendication 1, **caractérisé en ce qu'**un rapport d'une longueur de la portion de guidage (5111) dans la première direction (X) à une longueur du segment de flexion (511) dans la première direction (X) est de 0,4 à 0,8.

4. Composant d'électrode (50) selon l'une quelconque des revendications 1 à 3, **caractérisé en ce que** la portion de guidage (5111) comprend au moins un trou traversant (5111b).

5. Composant d'électrode (50) selon l'une quelconque des revendications 1 à 4, **caractérisé en ce qu'**une projection de la portion de guidage (5111) dans un plan perpendiculaire à la première direction (X) présente une forme triangulaire, une forme trapézoïdale, une forme en U, une forme rectangulaire ou une forme en V.

6. Composant d'électrode (50) selon l'une quelconque des revendications 1 à 5, dans lequel la première plaque d'électrode (51) est une plaque d'électrode positive, et la seconde plaque d'électrode (52) est une plaque d'électrode négative.

7. Batterie secondaire (30), dans laquelle la batterie secondaire (30) comprend un composant d'électrode (50) selon l'une quelconque des revendications 1 à 6.

8. Module de batterie (20), dans lequel le module de batterie (20) comprend une batterie secondaire (30) selon la revendication 7.

9. Dispositif, dans lequel le dispositif comprend une batterie secondaire (30) selon la revendication 7, et la batterie secondaire (30) est configurée pour fournir de l'énergie électrique.

10. Procédé de formage d'un composant d'électrode (50) pour une batterie secondaire (30), dans lequel :
le procédé de formage comprend les étapes suivantes à effectuer en séquence :
fournir une première plaque d'électrode (51) comprenant une pluralité de segments de flexion (511) et une pluralité de premiers segments d'empilement (512) qui sont pliées réciproquement pour former une forme en zigzag, chacun des segments de flexion (511) étant configurée pour relier deux premiers segments d'empilement (512) adjacents, dans lequel le segment de flexion (511) comprend une portion de guidage (5111) ;
fournir une seconde plaque d'électrode (52) ayant une polarité opposée à celle de la première plaque d'électrode (51), dans lequel la seconde plaque d'électrode (52) comprend une pluralité de seconds segments d'empilement (521), et chacun des seconds segments d'empilement (521) est disposé entre deux premiers segments d'empilement (512) adjacents ; et
courber le segment de flexion (511) le long de la portion de guidage (5111) de sorte que les deux premiers segments d'empilement (512) adjacents reliés au segment de flexion (511) soient empilées, dans lequel
la portion de guidage (5111) comprend au moins deux rainures (5111a), dans deux segments de flexion adjacents, une rainure (5111a) disposée dans un segment de flexion (511) est située sur un côté d'un collecteur de courant (51a) comprise dans la première plaque d'électrode (51), et l'autre rainure (5111a) disposée dans l'autre segment de flexion (511) est située sur l'autre côté du collecteur de courant (51a) de sorte que toutes les rainures ne soient que sur le côté intérieur des segments de flexion respectives après le pliage de la plaque d'électrode,
dans lequel la portion de guidage (5111) est disposée dans une première direction (X), la première direction (X) étant perpendiculaire à une direction de flexion (Z) du segment de flexion (511), et
une rainure dans le même segment de flexion est subdivisée en deux sous-rainures à intervalles de la première plaque d'électrode dans la direction de flexion (Z).

11. Procédé de formage selon la revendication 10, **caractérisé en ce que** le procédé de formage comprend en outre une étape de formage de la portion de guidage (5111) en utilisant au moins un parmi un coupe-métal, une découpeuse laser, et un outil de gravure liquide.

12. Procédé de formage selon la revendication 10, dans lequel à l'étape de courber le segment de flexion (511) le long de la portion de guidage (5111) de sorte que les deux premiers segments d'empilement (512) adjacents reliés au segment de flexion (511) soient empilées, chacun des premiers segments d'empilement (512) comprend deux premiers bords extérieurs opposés (5121), et le segment de flexion (511) est courbé le long de la portion de guidage (5111) de sorte que les premiers bords extérieurs (5121) des deux premiers segments d'empilement (512) adjacents reliés au segment de flexion (511) soient alignés.
